# EUROPEAN PATENT APPLICATION

(11) **EP 4 818 610 A1**
(43) Date of publication of application: **07.10.2026**
(21) Application number: 25822512.7
(22) Date of filing: 22.05.2025
(51) Int. Cl.: F25D 21/02, F25D 21/08, F25D 21/00, F25D 21/14, F25D 29/00, F25D 11/02, G01N 27/22

(54) **REFRIGERATOR AND CONTROL METHOD THEREOF**

(30) Priority: 14.06.2024 KR 20240077827
(71) Applicant: Samsung Electronics Co., Ltd., Suwon-si, Gyeonggi-do 16677 (KR)
(72) Inventor: LEE, Dongseok, Suwon-si Gyeonggi-do 16677 (KR); YOO, Sucheol, Suwon-si Gyeonggi-do 16677 (KR); CHO, Sungmin, Suwon-si Gyeonggi-do 16677 (KR); KIM, Kyoungmok, Suwon-si Gyeonggi-do 16677 (KR); BAE, Junhan, Suwon-si Gyeonggi-do 16677 (KR); SONG, Haejin, Suwon-si Gyeonggi-do 16677 (KR); LEE, Minkyung, Suwon-si Gyeonggi-do 16677 (KR); LEE, Jaehwan, Suwon-si Gyeonggi-do 16677 (KR); LEE, Juhyen, Suwon-si Gyeonggi-do 16677 (KR); JANG, Yongjoon, Suwon-si Gyeonggi-do 16677 (KR); JEONG, Kihun, Suwon-si Gyeonggi-do 16677 (KR); HAN, Donggi, Suwon-si Gyeonggi-do 16677 (KR); HAN, Jeongsu, Suwon-si Gyeonggi-do 16677 (KR)
(74) Representative: Walaski, Jan Filip
(86) International application number: PCT/KR2025/006967
(87) International publication number: WO 2025/258882

(57) **Abstract**

The present invention relates a home appliance and a control method thereof. The home appliance comprises: a storage chamber; a cooling unit configured to supply cold air to the storage chamber, wherein the cooling unit includes a heat exchanger including a plurality of fins; a detection sensor; and a detection circuit configured to detect capacitance between the detection sensor and the plurality of fins, which varies on the basis of the amount of frost formed in the heat exchanger, and detect the amount of frost formed in the heat exchanger on the basis of the detected capacitance.

## Description

### [Technical Field]

An embodiment of the disclosure relates to a refrigerator and a method for removing frost generated on a heat exchanger of the refrigerator.

### [Background Art]

In general, a refrigerator is a device that includes a storage room and a cold air supply device for supplying cold air to the storage room to keep food fresh. The temperature in the storage room may be maintained within a certain range required to keep food fresh. The storage room of the refrigerator may be provided to have an open front surface, and the open front surface may be closed by a door to maintain the temperature of the storage room in usual times. The storage room may be partitioned by a refrigerating compartment and a freezing compartment that may be opened/closed by a refrigerating compartment door and a freezing compartment door, respectively.

The storage room may receive cold air by the cold air supply device to maintain the internal temperature within a predetermined range. The cold air supply device may include an evaporator that absorbs heat around while the refrigerant evaporates, keeping the storage room at a predetermined temperature by heat exchange with the air in the storage room.

Meanwhile, water vapor introduced into the refrigerator or water vapor contained in the food stored in the refrigerator may turn into frost on the outer surface of the heat exchanger or evaporator included in the cold air supply device by temperature differences. Frost buildup may deteriorate the cooling efficiency of the refrigerator and increase power consumption.

Accordingly, it is possible to efficiently control the power consumption of the refrigerator by operating the defrost heater of the refrigerator in response to the size or amount of frost buildups.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

Aspects of embodiments of the disclosure will be set forth in part in the description which follows and, in part, will be apparent from the description, or may be learned by practice of the presented embodiments.

According to an embodiment of the disclosure, a refrigerator includes a detection sensor for detecting the amount of frost building up on the heat exchanger.

According to an embodiment of the disclosure, provided is a method for determining a defrost time to start a defrost cycle in response to the amount of frost in a refrigerator.

According to an embodiment of the disclosure, a home appliance includes a storage room; a cooling part configured to supply cold air to the storage room, the cooling part including a heat exchanger including a plurality of fins; a detection sensor, and a detection circuit configured to detect a capacitance between the detection sensor and the plurality of fins, and that varies based on an amount of frost formed on the heat exchanger, and detect the amount of frost formed on the heat exchanger based on the detected capacitance.

According to an embodiment of the disclosure, the detection circuit may include a variable capacitor and a ground terminal. The detection sensor may be connected to the variable capacitor. The plurality of fins may be connected to the ground terminal.

According to an embodiment of the disclosure, the detection sensor may include an electrode layer including a conductive material, and a protective film covering one surface or two opposite surfaces of the electrode layer.

According to an embodiment of the disclosure, the conductive material may include graphene.

According to an embodiment of the disclosure, the home appliance may further include a cover sheet covering a portion of a surface of the heat exchanger, the cover sheet including a first cover sheet and a second cover sheet, and a drain cover under the heat exchanger. A lower side of the first cover sheet may be connected to an upper side of the drain cover. The second cover sheet may be at a relatively higher position than the first cover sheet. The detection sensor may be attached to one of an inner surface of the first cover sheet or an inner surface of the second cover sheet facing the heat exchanger.

According to an embodiment of the disclosure, each of the cover sheet and the drain cover may include a non-conductive material.

According to an embodiment of the disclosure, the cover sheet may include a mica sheet.

According to an embodiment of the disclosure, the heat exchanger may include side panels respectively arranged on two opposite side surfaces of the heat exchanger. The second cover sheet may be coupled to the side panels.

According to an embodiment of the disclosure, each of the side panels may include a coupling protrusion protruding from an edge of the respective side panels, and fixed into respective coupling holes formed in opposite sides of the second cover sheet.

According to an embodiment of the disclosure, the detection sensor may have a predetermined area defined by a horizontal length and a vertical width of the detection sensor. The horizontal length of the detection sensor may equal a horizontal length of the heat exchanger. The vertical width of the detection sensor may be 5mm to 10mm.

According to an embodiment of the disclosure, a home appliance includes a storage room; a cooling part configured to supply cold air to the storage room, the cooling part including a heat exchanger including a plurality of fins; a detection sensor; a detection circuit configured to detect a capacitance between the detection sensor and the plurality of fins; a defrost heater configured to heat the heat exchanger to remove frost from the heat exchanger; and a processor configured to obtain sensing information based on the detected capacitance, generate a plurality of data based on the obtained sensing information, the generated plurality of data including first data indicating an amount of the frost on the heat exchanger and second data indicating a speed at which the frost accumulates on the heat exchanger, determine a defrost start time to turn on the defrost heater to remove the frost on the heat exchanger based on the first data and the second data included in the generated plurality of data, and turn on the defrost heater based on reaching the determined defrost start time.

According to an embodiment of the disclosure, the processor may be configured to determine the defrost start time based on the first data exceeding a first threshold and the second data exceeding a second threshold.

According to an embodiment of the disclosure, the cooling part may include a compressor. The generated plurality of data may include third data indicating a time at which the compressor is driven. The processor may be configured to determine the defrost start time based on the first data, the second data, and the third data included in the generated plurality of data.

According to an embodiment of the disclosure, the detection sensor may be configured to detect the capacitance between the detection sensor and the plurality of fins, and that varies based on the amount of frost formed on the heat exchanger, at a predetermined time period.

According to an embodiment of the disclosure, the detection circuit may include a variable capacitor and a ground terminal. The detection sensor may be connected to the variable capacitor. The plurality of fins may be connected to the ground terminal.

According to an embodiment of the disclosure, provided is a control method for removing frost on a surface of a heat exchanger of a home appliance including a storage room, a cooling part configured to supply cold air to the storage room, the cooling part including the heat exchanger including a plurality of fins, a detection sensor, a detection circuit configured to detect a capacitance between the detection sensor and the plurality of fins, and a defrost heater configured to heat the heat exchanger to remove frost from the heat exchanger, the control method including obtaining sensing information, through the detection circuit, based on a detected capacitance detected between the detection sensor and the plurality of fins; generating a plurality of data based on the obtained sensing information, the generated plurality of data including first data indicating an amount of the frost on the heat exchanger and second data indicating a speed at which the frost accumulates on the heat exchanger; determining a defrost start time to turn on the defrost heater to remove the frost on the heat exchanger based on the first data and the second data included in the plurality of data; and turning on the defrost heater based on reaching the determined defrost start time.

According to an embodiment of the disclosure, the control method may further include determining the defrost start time based on the first data exceeding a first threshold and the second data exceeding a second threshold.

According to an embodiment of the disclosure, the cooling part may include a compressor. The generated plurality of data may include third data indicating a time at which the compressor is driven. The control method may further include determining the defrost start time based on the first data, the second data, and the third data included in the generated plurality of data.

According to an embodiment of the disclosure, the detection sensor may be configured to detect the capacitance between the detection sensor and the plurality of fins, and that varies based on the amount of frost formed on the heat exchanger, at a predetermined time period.

According to an embodiment of the disclosure, the detection circuit may include a variable capacitor and a ground terminal. The detection sensor may be connected to the variable capacitor. The plurality of fins may be connected to the ground terminal.

The disclosure is not limited to the foregoing embodiments but various modifications or changes may rather be made thereto without departing from the spirit and scope of the disclosure.

### [Brief Description of Drawings]

FIG. 1 is a perspective view illustrating a refrigerator according to an embodiment of the disclosure;
FIG. 2 is a cross-sectional view illustrating a refrigerator as viewed from a side according to an embodiment of the disclosure;
FIG. 3 is a perspective view illustrating a heat exchanger of a refrigerator according to an embodiment of the disclosure;
FIG. 4 is a rear view illustrating a heat exchanger as viewed from the rear according to an embodiment of the disclosure;
FIG. 5 is an exploded perspective view illustrating a heat exchanger and a drain cover disposed under the heat exchanger according to an embodiment of the disclosure;
FIG. 6 is a front view illustrating a heat exchanger and a second cover sheet as viewed from the front according to an embodiment of the disclosure;
FIG. 7 is a cross-sectional view schematically illustrating a heat exchanger and a detection sensor as viewed from the top according to an embodiment of the disclosure;
FIG. 8A is a cross-sectional view schematically illustrating a heat exchanger and a detection sensor as viewed from the top according to an embodiment of the disclosure;
FIG. 8B is a cross-sectional view schematically illustrating a heat exchanger and a detection sensor as viewed from the top according to an embodiment of the disclosure;
FIG. 9A is an enlarged view illustrating a portion of a second cover sheet coupled to a heat exchanger according to an embodiment of the disclosure;
FIG. 9B is an enlarged view illustrating a portion of a second cover sheet coupled to a heat exchanger according to an embodiment of the disclosure;
FIG. 9C is an enlarged view illustrating a portion of a second cover sheet coupled to a heat exchanger according to an embodiment of the disclosure;
FIG. 10 is a side cross-sectional view illustrating a configuration of a cover sheet and a detection sensor attached to the cover sheet according to an embodiment of the disclosure;
FIG. 11 is a side cross-sectional view illustrating a configuration of a cover sheet and a detection sensor attached to the cover sheet according to an embodiment of the disclosure;
FIG. 12 is a perspective view illustrating a connector connected to one side of a detection sensor according to an embodiment of the disclosure;
FIG. 13 is an exploded perspective view illustrating a detection circuit assembly according to an embodiment of the disclosure;
FIG. 14 is a circuit diagram illustrating a detection circuit according to an embodiment of the disclosure;
FIG. 15 is a cross-sectional view of a refrigerator for illustrating an area where a detection circuit assembly is mounted according to an embodiment of the disclosure;
FIG. 16 is an enlarged view illustrating an area where a detection circuit assembly is mounted when the detection circuit assembly is mounted in a first mounting area according to an embodiment of the disclosure;
FIG. 17 is an enlarged view illustrating an area where a detection circuit assembly is mounted when the detection circuit assembly is mounted in a second mounting area according to an embodiment of the disclosure;
FIG. 18 is a block diagram illustrating a configuration of a refrigerator according to an embodiment of the disclosure.
FIG. 19 is a block diagram illustrating a refrigerator configured to remove frost formed on a heat exchanger according to an embodiment of the disclosure;
FIG. 20 is a flowchart illustrating control for a refrigerator to determine a defrost start time to drive a defrost heater according to an embodiment of the disclosure;
FIG. 21 is a flowchart illustrating control for a refrigerator to determine a defrost start time to drive a defrost heater according to an embodiment of the disclosure;
FIG. 22 is a graph illustrating data generated based on sensing data for a refrigerator to determine a defrost start time;
FIG. 23 is a flowchart illustrating control for a refrigerator to determine a defrost start time to drive a defrost heater according to an embodiment of the disclosure; and
FIG. 24 is a flowchart illustrating control for a refrigerator to determine a defrost start time to drive a defrost heater according to an embodiment of the disclosure.

### [Mode for the Invention]

An embodiment of the disclosure and terms used therein are not intended to limit the technical features described in the disclosure to specific embodiments, and should be understood to include various modifications, equivalents, or substitutes of the embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

In the disclosure, the terms "front and rear direction", "left and right direction", and "upper and lower direction" to be used below may be used with respect to the illustrated drawings, and the shape and position of each component are not limited thereto.

According to an embodiment, each component (e.g., a module or a program) of the above-described components may include a single entity or multiple entities. Some of the plurality of entities may be separately disposed in different components.

Various embodiments of the disclosure may be applied to various home appliances including a heat exchanger, as well as refrigerators. For example, various embodiments of the disclosure may be applied to air conditioners including a heat exchanger. However, for convenience of description, a refrigerator is illustrated as an example, and in various other home appliances including a heat exchanger, the disclosure may also be applied to structures and methods for removing frost formed on the heat exchanger.

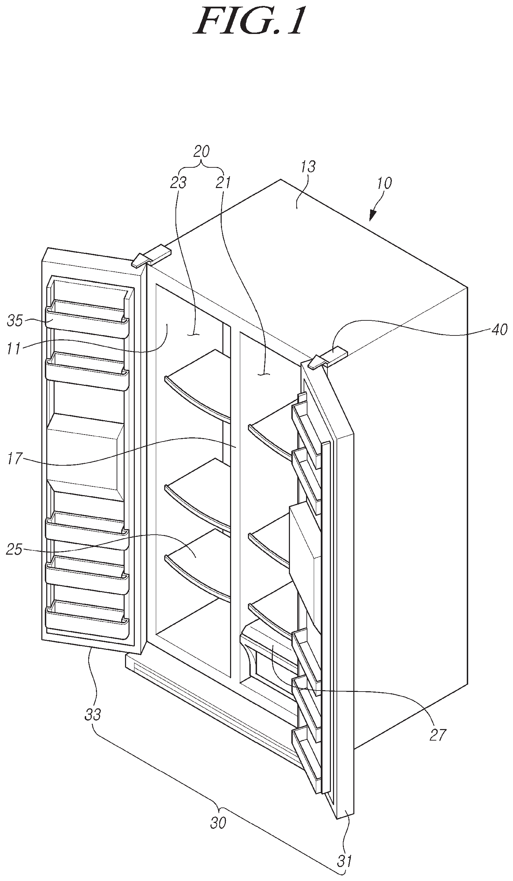

In general, refrigerators may be classified according to the shape of the storage room and the door. There are top mounted freezer (TMF)-type refrigerators in which the storage room is partitioned up and down by a horizontal partition wall to form the freezing compartment on the upper side and the refrigerating compartment on the lower side, and bottom mounted freezer (BMF)-type refrigerators in which the refrigerating compartment is formed on the upper side and the freezing compartment is formed on the lower side. Further, there are side-by-side (SBS)-type refrigerators in which the storage room is partitioned left and right by a vertical partition wall to form the freezing compartment on one side and the refrigerating compartment on the upper side, and French door refrigerator (FDR)-type refrigerators in which the storage room is partitioned up and down by a horizontal partition wall to form the refrigerating compartment on the upper side and the freezing compartment on the lower side, in which the refrigerating compartment on the upper side is opened/closed by a pair of doors. It may be understood that the refrigerator (e.g., the refrigerator 1 of FIG. 1) and the control method of the refrigerator 1, which are described below, may be illustrated as an example to help understand the disclosure, and various changes may be made thereto. For example, the refrigerator 1, which is described below with reference to FIG. 1 and the subsequent figures, is not limited to the FDR-type refrigerator, but may be applied to various types of refrigerators.

Further, in some of the accompanying drawings, some components may be shown as exaggerated, rather than real, for a better understanding.

FIG. 1 is a perspective view illustrating a refrigerator 1 according to an embodiment of the disclosure.

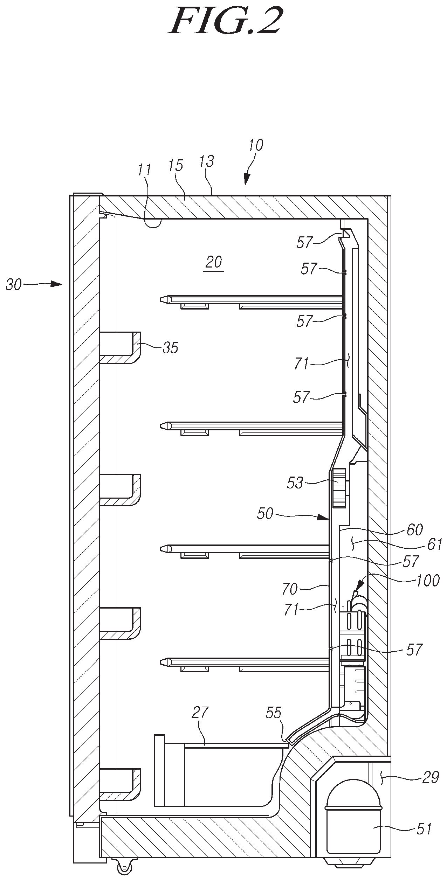

FIG. 2 is a cross-sectional view illustrating a refrigerator 1 as viewed from a side according to an embodiment of the disclosure.

Referring to FIGS. 1 and 2, a refrigerator 1 may include a main body 10 forming the exterior, a storage room 20 provided to have an open front surface inside the main body 10, a door 30 rotatably coupled to the main body 10 to open/close the open front surface, and a hinge 40 for rotatably coupling the door 30 to the main body 10.

According to an embodiment, the main body 10 may include an inner case 11 forming the storage room 20 and an outer case 13 forming the exterior, and an insulation material 15 may be disposed between the inner case 11 and the outer case 13 to prevent cold air from leaking from the storage room 20. The main body 10 may include a partition wall 17 that divides the storage room 20 into a refrigerating chamber 21 and a freezing chamber 23 on the left and right sides, and a machine room 29 where a compressor 51 for compressing the refrigerant and a condenser for condensing the compressed refrigerant are installed may be provided on the rear lower side of the main body 10.

According to an embodiment, the storage room 20 may be partitioned left/right or up/down by a partition wall 17. The refrigerating compartment 21 may be provided on one side of the partitioned storage room 20, and the freezing compartment 23 may be provided on the other side of the partitioned storage room 20. For example, the refrigerating chamber 21 may be provided on the right side of the partitioned main body 10, and the freezing chamber 23 may be provided on the left side of the partitioned main body 10. A plurality of shelves 25 and storage containers 27 may be provided inside the storage room 20 to store food or the like.

According to an embodiment, the storage room 20 may be opened or closed by a door 30 rotatably coupled to the main body 10. For example, the refrigerating compartment 21 and the freezing compartment 23 partitioned left and right by the partition wall 17 may be opened and closed by a refrigerating compartment door 31 and a freezing compartment door 33, respectively. The plurality of door shelves 35 may be provided on the rear surfaces of the refrigerating compartment door 31 and the freezing compartment door 33 to store food or the like.

According to an embodiment, the refrigerator may include a cold air supply device 50 for supplying cold air to the storage room 20. The cold air supply device 50 may form a cooling cycle implemented by a heat pump system. For example, the cold air supply device 50 may include a heat exchanger 100 including an evaporator, a compressor 51, a condenser, and an expansion valve. The cold air supply device 50 may include a fan 53 for flowing cold air generated by the evaporator of the heat exchanger 100 to the storage room 20, and ducts 60 and 70 forming an air flow passage.

According to an embodiment, the cold air supply device 50 may be defined as including the evaporator of the heat exchanger 100, the fan 53, ducts 60 and 70 that are directly related to cold air supply, except for the compressor 51 and the condenser installed in the machine room 29. Therefore, the heat exchanger 100 included in the cold air supply device 50 described below may include the evaporator.

According to an embodiment, it is illustrated that the cold air supply device 50 is disposed at the rear or on the rear surface of the storage room 20, but is not limited thereto.

According to an embodiment, the cold air supply device 50 may include a heat exchanger 100 for generating cold air, ducts 60 and 70 for forming an air flow passage inside the cold air supply device 50, and a fan 53 for forming a flow of air inside the ducts 60 and 70.

According to an embodiment, the ducts 60 and 70 may include an intake duct 60 forming an air inflow passage 61 through which air from the storage room 20 is introduced and an exhaust duct 70 forming an air outflow passage 71 for supplying cold air passing through the heat exchanger 100 to the storage room 20. The intake duct 60 may be disposed upstream of the fan 53, and the exhaust duct 70 may be disposed downstream of the fan 53.

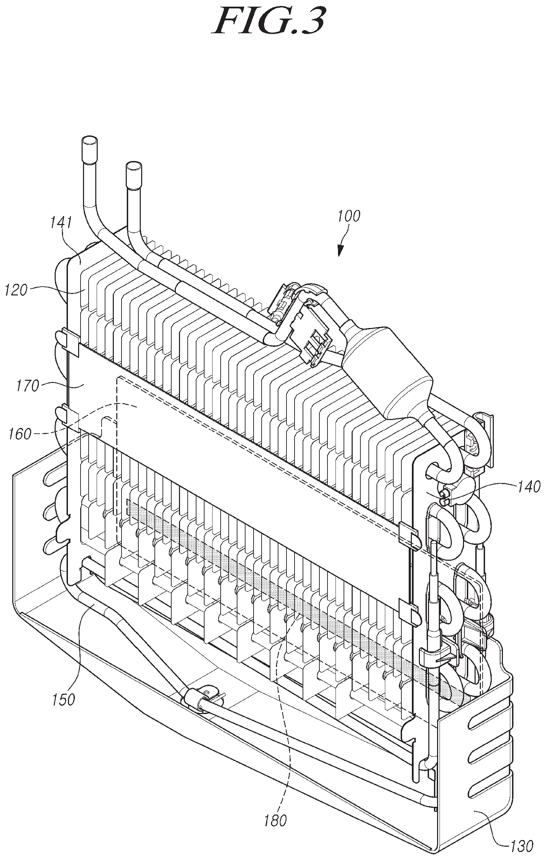

According to an embodiment, an inlet 55 through which the air from the storage room 20 is introduced may be provided at an end of the intake duct 60, and a plurality of outlets 57 may be provided in the exhaust duct 70 to disperse cold air to the storage room 20. FIG. 3 is a perspective view illustrating a heat exchanger 100 of a refrigerator (e.g., the refrigerator 1 of FIG. 1) according to an embodiment of the disclosure.

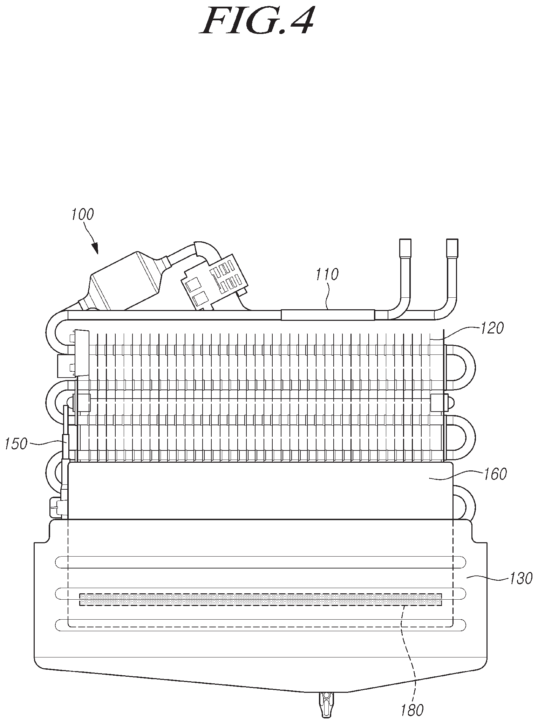

FIG. 4 is a rear view illustrating a heat exchanger 100 as viewed from the rear of the refrigerator 1 according to an embodiment of the disclosure.

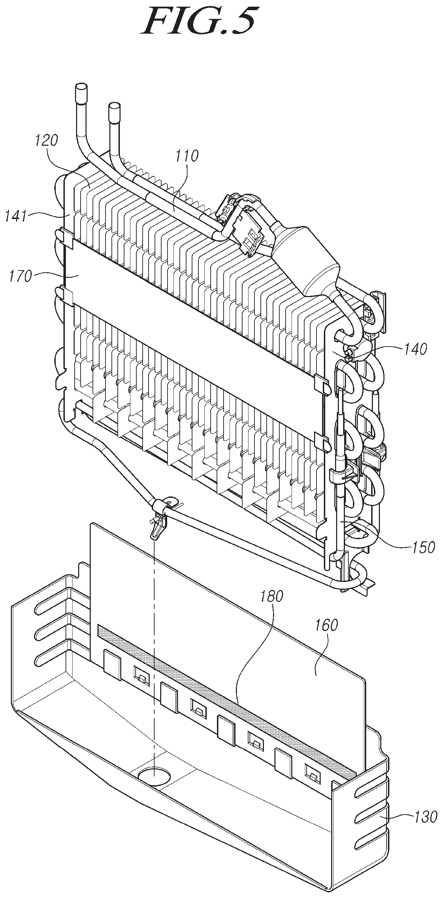

FIG. 5 is an exploded perspective view illustrating a heat exchanger 100 and a drain cover 130 disposed under the heat exchanger 100 according to an embodiment of the disclosure.

Referring to FIGS. 3 to 5, the cold air supply device 50 may include a heat exchanger 100 for generating cold air, a defrost heater 150 for removing frost generated on the heat exchanger 100, side panels 140 and 141 for supporting the heat exchanger 100 and the defrost heater 150, and a drain cover 130 surrounding a portion of the heat exchanger 100. As the frost formed on the heat exchanger 100 melts, the drain cover 130 may be configured to collect water droplets falling below the heat exchanger 100 and discharge them to the outside of the refrigerator 1.

According to an embodiment, the heat exchanger 100 generally has a rectangular parallelepiped configuration. However, the heat exchanger 100 is not limited thereto.

According to an embodiment, the drain cover 130 may form a portion of the intake duct 60 forming a flow path of air passing through the heat exchanger 100. The duct 60 described below may indicate the whole or part of the intake duct 60 accommodating the heat exchanger 100 and forming the flow passage of the air passing through the heat exchanger.

According to an embodiment, the heat exchanger 100 may include a tube 110 through which the refrigerant flows and a plurality of fins 120 coupled to the outer surface of the tube 110. The heat exchanger 100 may include a plurality of fins 120. The fins 120 may contact the outer surface of the tube 110 to accelerate heat exchange between the refrigerant flowing in the tube 110 and the air passing through the heat exchanger 100. It may be indicated that the heat exchanger 100 includes the fins 120, the tube 110, and the duct 60 directly related to the generation of cold air.

According to an embodiment, the fin 120 may be formed of various types of metallic materials including aluminum having high thermal conductivity. The fin 120 may be formed in a plate shape. The plurality of fins 120 may be disposed to be spaced apart in the left and right directions of the heat exchanger 100, which is a direction perpendicular to the direction in which air flows. The plurality of fins 120 may be arranged at predetermined intervals. The predetermined interval may be set considering resistance generated by air passing through the heat exchanger 100 due to the arrangement of a plurality of fins 120.

According to an embodiment, the plurality of fins 120 may be disposed to be spaced apart in the vertical direction, which is the direction in which air flows. When air moves upward from the lower side to the upper side, the left-right interval of the plurality of fins 120 disposed on the lower side considering air resistance may be wider than the left-right interval of the plurality of fins 120 disposed on the upper side.

According to an embodiment, the tube 110 may be placed to pass through the plurality of fins 120 horizontally in the left-right direction of the heat exchanger 100, which is the direction perpendicular to the direction in which air flows. When the plurality of fins 120 are disposed in the vertical direction along the air flow direction, the tube 110 may be disposed to be bent several times to cross along the air flow direction.

According to an embodiment, each fin 120 may include a hole through which the tube 110 passes. The hole may be disposed to be eccentric to one side of the fin 120. For example, the tube 110 may pass through the fin 120 multiple times, and in this case, the fin 120 may include a plurality of holes through which the tube 110 passes.

According to an embodiment, the cold air supply device 50 may include a defrost heater 150 for removing frost generated on the heat exchanger 100. The defrost heater 150 may be formed in the form of a pipe that transports heat. The defrost heater 150 may be disposed to pass through a side portion and a lower portion of the heat exchanger 100. For example, when the cold air supply device 50 is disposed behind the storage room 20, the defrost heater 150 may be disposed to pass through the front and lower portions of the heat exchanger 100. The defrost heater 150 may be placed in the left and right directions to cross the side or front portion of the heat exchanger 100.

According to an embodiment, the pipe forming the defrost heater 150 may be branched into a plurality of paths to remove frost formed near the partitioned area of the heat exchanger 100. For example, each defrost heater 150 branched into a plurality of pieces from a predetermined point may be controlled to operate separately. For example, if the defrost heater 150 is branched into two pieces, they may be disposed on the left or right side of the heat exchanger 100 to remove frost formed near the area where each defrost heater 150 is positioned. For example, if there are four defrost heaters 150, they may be placed on the upper left, upper right, lower left, and lower right sides of the heat exchanger 100 to remove frost formed near the area where each defrost heater 150 is positioned.

According to an embodiment, the cold air supply device 50 may include side panels 140 and 141 for supporting the heat exchanger 100 and the defrost heater 150. The side panels 140 and 141 may be disposed on two opposite sides of the heat exchanger 100 and the defrost heater 150. The side panels 140 and 141 may include a plurality of holes through which the tube 110 passes and a plurality of recesses through which the defrost heater 150 passes.

According to an embodiment, the defrost heater 150 may be supported by recesses formed in lower portions of the side panels 140 and 141 and recesses formed in the side portions. The defrost heater 150 may be supported at a total of four points provided on the side panels 140 and 141 disposed on two opposite sides of the heat exchanger 100, more firmly supporting the defrost heater 150.

According to an embodiment, each of the side panels 140 and 141 may include a plurality of recesses formed in a side portion. Since the side panels 140 and 141 include a plurality of recesses according to the height, the defrost heater 150 may be disposed at an appropriate height as needed and may be disposed to cross the side portion of the heat exchanger 100 several times as needed.

According to an embodiment, the cover sheets 160 and 170 may be disposed to cover a portion of the outer surface of the heat exchanger 100. The cover sheets 160 and 170 may protect components around the heat exchanger 100 from being damaged by heat generated by the defrost heater 150. For example, the cover sheets 160 and 170 may protect the inner case 11, the outer case 13, and/or the insulation 15 of the refrigerator 1 disposed around the heat exchanger 100 from being damaged. For example, the cover sheets 160 and 170 may be disposed behind the heat exchanger 100, but are not limited thereto, and the cover sheets 160 and 170 may be disposed adjacent to the heat exchanger 100 to protect surrounding components from heat by the defrost heater 150.

According to an embodiment, the cover sheets 160 and 170 may be formed of an insulating material to protect surrounding components from high-temperature heat generated by the defrost heater 150. The cover sheets 160 and 170 may be formed of a heat-resistant material to minimize deformation from high-temperature heat generated by the defrost heater 150.

According to an embodiment, the cover sheets 160 and 170 may provide a space where a detection sensor 180 to be described below may be attached. The detection sensor 180 may be attached to the inner surfaces of the cover sheets 160 and 170. The detection sensor 180 may be configured to detect the amount of frost formed on the plurality of fins 120. The detection sensor 180 may measure capacitance between the plurality of fins 120 and the detection sensor 180 to generate the amount of the formed frost as an electrical signal.

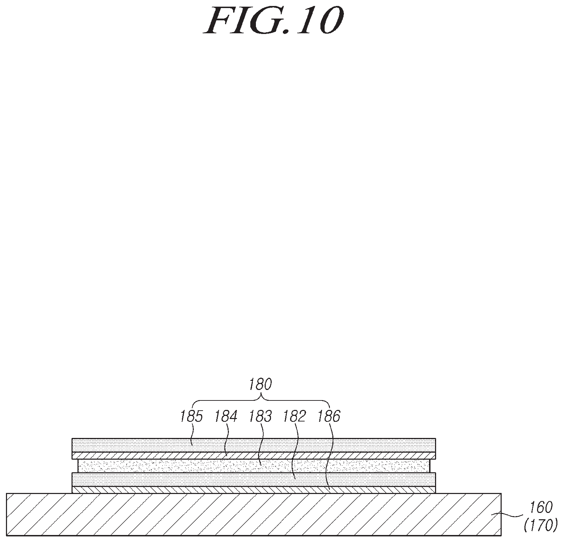

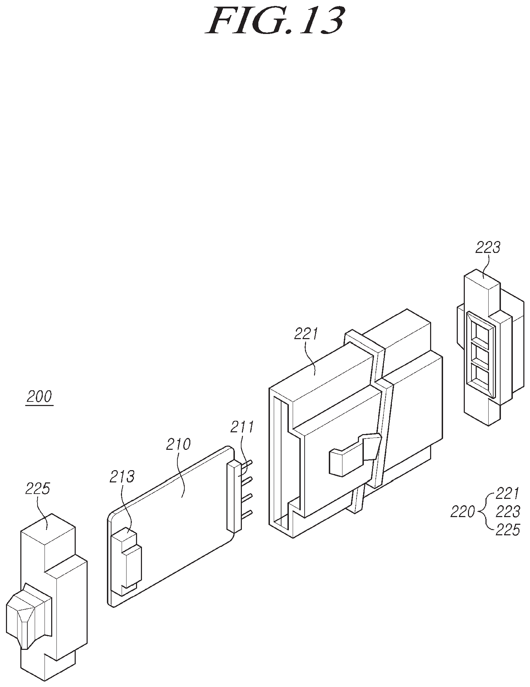

According to an embodiment, the detection sensor 180 may be electrically connected to a detection circuit assembly (e.g., the detection circuit assembly 200 of FIG. 13). The detection circuit assembly 200 may periodically transmit an electric signal having a predetermined intensity to the detection sensor 180. The detection circuit assembly 200 may detect a change in capacitance between the electrode layer (e.g., the electrode layer 183 of FIG. 10) included in the detection sensor 180 and the detection circuit assembly 200.

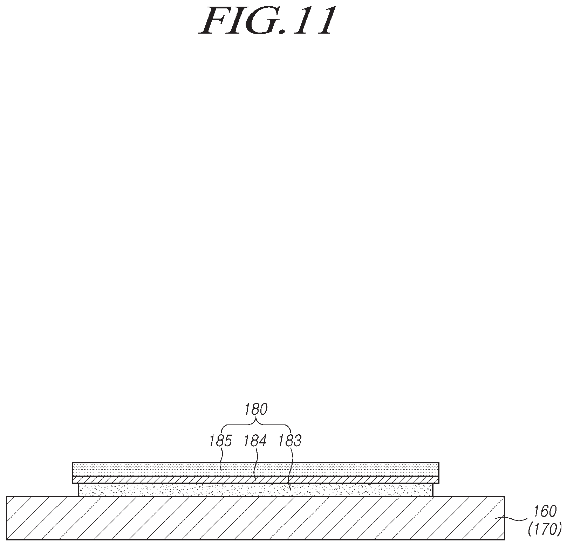

According to an embodiment, the detection sensor 180 may be configured by stacking a detection sensor (e.g., the electrode layer 183 of FIG. 10) and a plurality of layers including a protective layer covering the detection sensor. The stacked structure of the detection sensor 180 is described with reference to FIGS. 10 and 11.

According to an embodiment, in order to increase the detection accuracy of the detection sensor 180, the cover sheets 160 and 170 may be formed of an insulating material. When the cover sheets 160 and 170 are formed of a conductive material (e.g., a metallic material including aluminum), the sensitivity of the detection sensor 180 may be affected. Accordingly, the capacitance sensed by the detection sensor 180 may not accurately indicate the amount of frost. Therefore, the cover sheets 160 and 170 may be formed of an insulating material.

According to an embodiment, the cover sheets 160 and 170 may be formed of a thermal insulating material and an insulating material. For example, the cover sheets 160 and 170 may be manufactured by processing a mica sheet composed of mica. However, without limitations thereto, the cover sheets 160 and 170 may be formed of a material having thermal insulation performance, heat resistance performance, and insulation functions.

According to an embodiment, the cover sheets 160 and 170 may include a first cover sheet 160 and a second cover sheet 170. For example, the first cover sheet 160 may be disposed to cover the lower portion of the heat exchanger 100, and the second cover sheet 160 may be disposed to cover the upper portion of the heat exchanger 100.

According to an embodiment, the first cover sheet 160 may be disposed to cover the lower portion of the heat exchanger 100. For example, the cover sheet 160 may be disposed on the upper side of the drain cover 130. For example, the lower side of the first cover sheet 160 may be fixed to the upper side of the drain cover 130. To that end, a coupling hole for coupling with the first cover sheet 160 may be formed in the upper side of the drain cover 130, and a coupling protrusion to be fittingly fixed into the coupling hole may be formed on the lower side of the first cover sheet 160.

According to an embodiment, the detection sensor 180 may be disposed on at least one of the first cover sheet 160 and the second cover sheet 170. For example, the detection sensor 180 may be disposed on either the inside of the first cover sheet 160 or the inside of the second cover sheet 170. For example, the detection sensor 180 may be disposed on both the inside of the first cover sheet 160 and the second cover sheet 170. Unless otherwise stated, it will be assumed that the detection sensor 180 is attached to either the inner surface of the first cover sheet 160 or the inner surface of the second cover sheet 170.

According to an embodiment, the detection sensor 180 may be attached to one side surface of the first cover sheet 160. The detection sensor 180 may be disposed on the inner surface of the first cover sheet 160 adjacent to the heat exchanger 100. The detection sensor 180 may be disposed in a direction perpendicular to the direction in which the plurality of fins 120 included in the heat exchanger 100 are arranged. For example, the plurality of fins 120 may be arranged toward the front or rear of the refrigerator 1, and the detection sensor 180 may be disposed parallel to the rear or front surface of the heat exchanger 100.

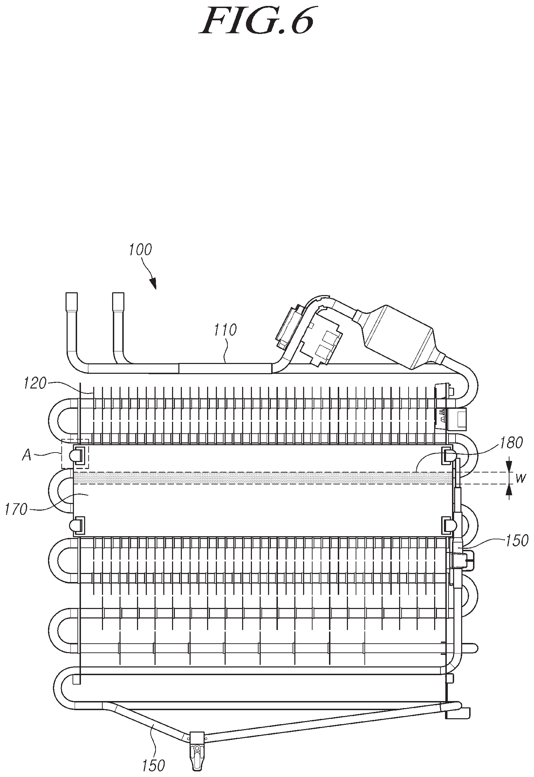

FIG. 6 is a front view illustrating a heat exchanger 100 (e.g., the heat exchanger 100 of FIG. 3) and a second cover sheet 170 as viewed from the front according to an embodiment of the disclosure.

The embodiment of FIG. 6 may be selectively combined with FIGS. 1 to 5.

Referring to FIG. 6, the second cover sheet 170 may be disposed to cover a portion of the front surface of the heat exchanger 100. The second cover sheet 170 may be disposed at a predetermined height from the heat exchanger 100 to cover an upper front surface of the heat exchanger 100.

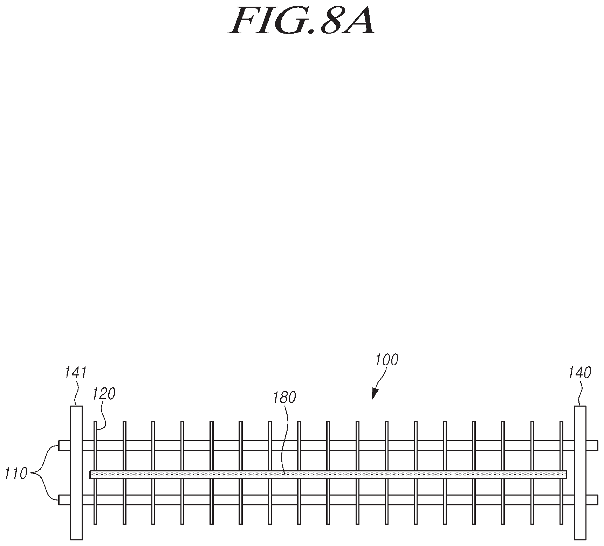

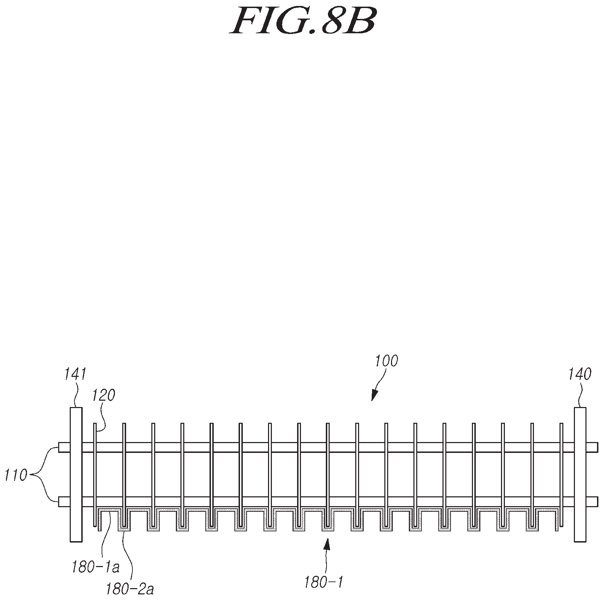

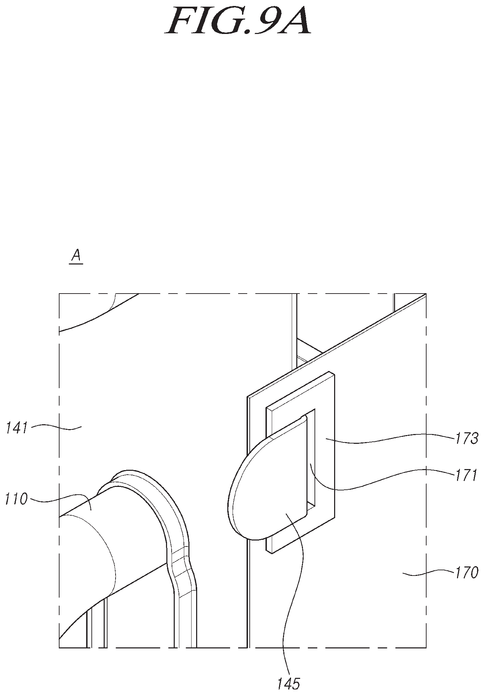

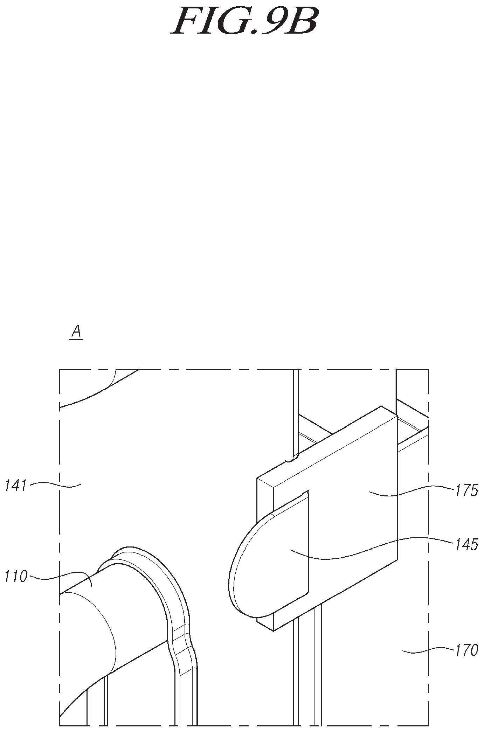

According to an embodiment, in order for the second cover sheet 170 to be mounted on the heat exchanger 100, two opposite sides of the second cover sheet 170 may be coupled to the side panels (e.g., the side panels 140 and 141 of FIG. 3), respectively, of the heat exchanger 100. For example, each of the side panels 140 and 141 may include a coupling protrusion (e.g., the coupling protrusion 145 of FIGS. 9A and 9B), and two opposite sides of the second cover sheet 170 may include coupling holes (e.g., the coupling hole 171 of FIG. 9A) or coupling members (e.g., the coupling member 175 of FIG. 8) for coupling with the coupling protrusions 145. A detailed structure in which the second cover sheet 170 is coupled to the side panels 140 and 141 is described with reference to FIGS. 9A to 9C.

According to an embodiment, the detection sensor 180 may be disposed on one surface of the second cover sheet 170. The detection sensor 180 may be disposed on an inner surface of the second cover sheet 170 adjacent to the heat exchanger 100. The detection sensor 180 may include an electrode layer (e.g., the electrode layer 183 of FIG. 10) formed of a conductive material. For example, the electrode layer 183 may be formed of any one of graphene, silver, and copper. The detection sensor 180 may detect the amount of frost formed on the plurality of fins 120 included in the heat exchanger 100.

According to an embodiment, the detection sensor 180 may have a predetermined width in the height direction of the heat exchanger 100. For example, the predetermined width may be 5mm to 10mm.

According to an embodiment, one or more detection sensors 180 may be provided. For example, when one detection sensor 180 is provided, the detection sensor 180 may be attached to either the first cover sheet 160 or the second cover sheet 170. For example, when two detection sensors 180 are provided, the two detection sensors 180 may be attached to the first cover sheet 180 and the second cover sheet 170, respectively. For example, when three or more detection sensors 180 are provided, one or more detection sensors 180 may be attached to the first cover sheet 180 and the second cover sheet 170.

According to an embodiment, when a plurality of detection sensors 180 are provided, the amount of frost formed in an area corresponding to the position of the detection sensor 180 may be detected.

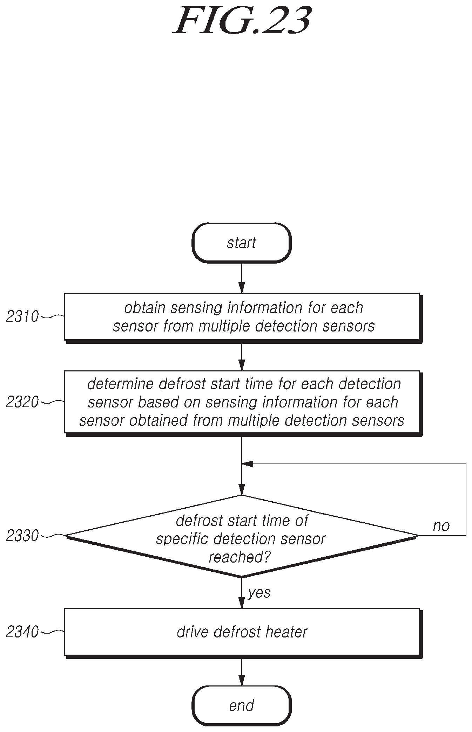

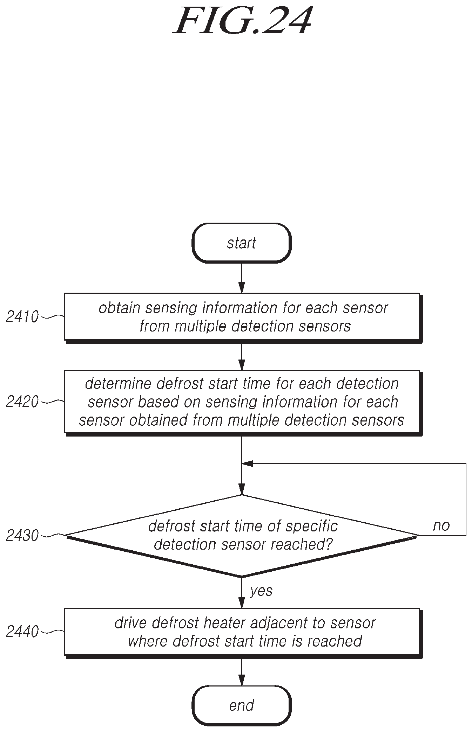

According to an embodiment, when a plurality of detection sensors 180 are provided, the refrigerator (e.g., the refrigerator 1 of FIG. 1) may be configured to control the driving of the defrost heater 150 based on data sensed by the detection sensor 180 in response to the number of defrost heaters (e.g., the defrost heater 150 of FIG. 3). For example, when a plurality of detection sensors 180 and one defrost heater 150 are provided, the refrigerator 1 may drive the defrosting heater 150 if arriving at the defrosting start time determined based on data sensed by any one of the detection sensors 180. For example, when a plurality of detection sensors 180 and a plurality of defrost heaters 150 are provided, if a specific detection sensor 180 among the plurality of detection sensors 180 indicates arrival at the defrost start time, the refrigerator 1 may control to drive the defrost heater 150 adjacent to the detection sensor 180 indicating the arrival at the defrost start time. A description related thereto is given with reference to the control flowcharts of FIGS. 23 and 24.

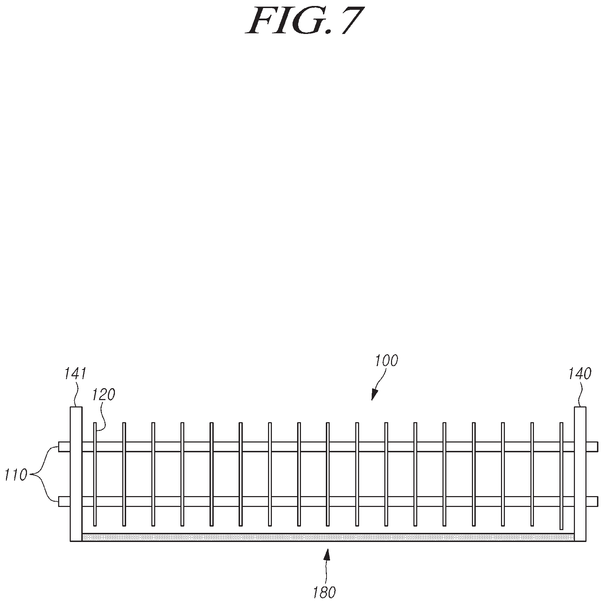

FIG. 7 is a cross-sectional view schematically illustrating a heat exchanger (e.g., the heat exchanger 100 of FIG. 1) and a detection sensor (e.g., the detection sensor 180 of FIG. 3) as viewed from the top according to an embodiment of the disclosure. FIG. 7 may be understood as a cross-sectional view illustrating the heat exchanger 100 of FIG. 6 at a predetermined height (e.g., the height at which the detection sensor 180 is positioned).

FIG. 8A is a cross-sectional view schematically illustrating a heat exchanger 100 and a detection sensor 180 as viewed from the top according to an embodiment of the disclosure. FIG. 8A may be understood as an extended embodiment when the detection sensor 180 is disposed inside a plurality of fins (e.g., the plurality of fins 120 of FIG. 3).

FIG. 8B is a cross-sectional view schematically illustrating a heat exchanger 100 and a detection sensor 180-1 (e.g., the detection sensor 180 of FIG. 3) as viewed from the top according to an embodiment of the disclosure. FIG. 8B may be understood as an extended embodiment in which the shape of the detection sensor 180-1 is formed to correspond to the shape of the surface of the heat exchanger 100, and is disposed on the surface of the heat exchanger 100.

For convenience of description, some components included in the heat exchanger 100 or some components around the heat exchanger 100 (e.g., the cover sheets 160 and 170 of FIG. 5) may be omitted from FIGS. 7, 8A, and 8B.

The embodiments of FIGS. 7, 8A, and 8B may be selectively combined with the embodiments of FIGS. 1 to 6.

Referring to FIG. 7, the detection sensor 180 may be disposed in front of the heat exchanger 100. The detection sensor 180 may be disposed at a predetermined height from the lower portion of the heat exchanger 100. For example, the detection sensor 180 may be disposed in a horizontal direction of the heat exchanger 100.

According to an embodiment, the detection sensor 180 may detect frost generated on a plurality of fins (e.g., the plurality of fins 120 of FIG. 3). For example, the detection sensor 180 and the plurality of fins 120 each may be electrically connected to a detection circuit (e.g., the detection circuit 210 of FIG. 13). The detection circuit 210 may detect the amount of frost generated on the heat exchanger 100 based on the capacitance between the detection sensor 180 and the plurality of fins 120.

According to an embodiment, when the detection circuit 210 detects the amount of frost based on the capacitance, the detection accuracy or sensitivity may increase as the distance between the detection sensor 180 and the plurality of fins 120 decreases. For example, as the distance between the detection sensor 180 and the plurality of fins 120 decreases, the frequency at which unnecessary noise is input to the sensing value of the detection sensor 180 may decrease.

For example, when the detection sensor 180 is disposed in front of the heat exchanger 100, the detection sensor 180 may detect the amount of frost generated in front of the heat exchanger 100 relatively accurately, but may relatively inaccurately detect the amount of frost generated in the rear of the heat exchanger 100. Therefore, FIGS. 8A and 8B, which are described below, illustrate an extendable embodiment for the shape of the detection sensor 180-1 or the disposition direction of the detection sensor 180 in order for the detection sensor 180 to relatively accurately detect the amount of frost generated on the heat exchanger 100.

Referring to FIG. 8A, the detection sensor 180 may be disposed inside the heat exchanger 100. For example, the detection sensor 180 may be disposed to penetrate a plurality of fins 120, or a plurality of fins 120 may be arranged toward the front or rear of the detection sensor 180. For example, the detection sensor 180 may be disposed in a direction parallel to the horizontal direction of the heat exchanger 100. However, without limitations thereto, the detection sensor 180 may be disposed not to be parallel to the horizontal direction of the heat exchanger 100. For example, the detection sensor 180 may be disposed diagonally with respect to the center of the heat exchanger 100.

According to an embodiment, as the detection sensor 180 is disposed inside the heat exchanger 100, detection performance of the detection sensor 180 may be increased. For example, the detection sensor 180 may relatively accurately detect frost generated on the front or rear of the heat exchanger 100.

Referring to FIG. 8B, the detection sensor 180-1 may be formed to correspond to the irregular shape of the plurality of fins 120. For example, the detection sensor 180-1 may include a convex portion 180-2a protruding forward and a concave portion 180-1a protruding backward of the heat exchanger 100. The detection sensor 180-1 may be formed by alternately arranging the convex portions 180-2a and the concave portions 180-1a. For example, the convex portion 180-2a may be disposed adjacent to the front end of the plurality of fins 120, and the concave portion 180-1a may be disposed adjacent to any one of the tubes 110.

According to an embodiment, as the detection sensor 180-1 is disposed relatively adjacent to the plurality of fins 120, the detection performance of the detection sensor 180-1 may be increased. For example, the detection sensor 180-1 of FIG. 8B may be disposed adjacent to the plurality of fins 120 compared to the detection sensor 180 of FIG. 7, thereby more accurately detecting the amount of frost generated on the front or rear of the heat exchanger 100.

FIG. 9A is an enlarged view illustrating a portion (e.g., area A of FIG. 6) of a second cover sheet (e.g., the second cover sheet 170 of FIG. 3) coupled to a heat exchanger (e.g., the heat exchanger 100 of FIG. 3) according to an embodiment of the disclosure.

FIG. 9B is an enlarged view illustrating a portion (e.g., area A of FIG. 6) of a second cover sheet 170 coupled to a heat exchanger 100 according to an embodiment of the disclosure.

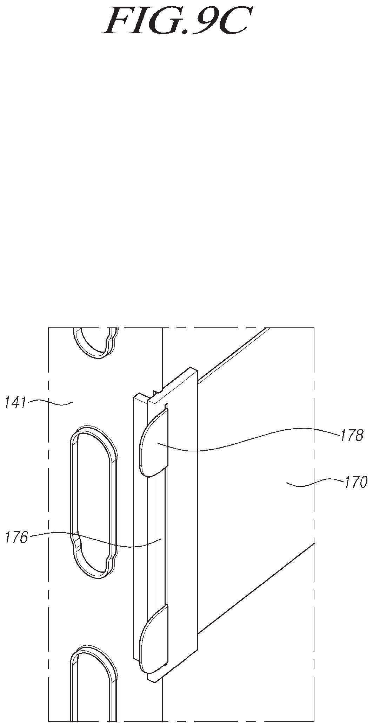

FIG. 9C is an enlarged view illustrating a portion (e.g., area A of FIG. 6) of a second cover sheet 170 coupled to a heat exchanger 100 according to an embodiment of the disclosure.

FIGS. 9A to 9C may be understood as illustrating various embodiments of a method for coupling the second cover sheet 170 coupled to the heat exchanger 100. The heat exchanger 100 and the second cover sheet 170 may be applied to any one of FIGS. 9A to 9C.

The embodiments of FIGS. 9A to 9C may be selectively bonded with the embodiments of FIGS. 3 to 6.

Referring to FIG. 9A, the side panel 141 (e.g., the side panels 140 and 141 of FIG. 3) may include a coupling protrusion 145. The coupling protrusion 145 may be formed to protrude from a predetermined point of the side panel 141. The coupling protrusion 145 may protrude in the front direction of the heat exchanger 100.

According to an embodiment, the second cover sheet 170 may include a fastening hole 171 formed to allow the coupling protrusion 145 included in the side panel 141 to pass therethrough. The second cover sheet 170 may include a fixing hook 173. The fixing hook 173 may provide a fixing force to the coupling protrusion 145 after the coupling protrusion 145 passes through the fastening hole 171.

According to an embodiment, when the second cover sheet 170 is coupled to the heat exchanger 100, the coupling protrusion 145 included in the side panel 141 may pass through the fastening hole 171. After the coupling protrusion 145 passes through the fastening hole 171, the fixing hook 173 may be inserted into the coupling protrusion 145. After the fixing hook 173 is inserted into the coupling protrusion 145, the coupling protrusion 145 is bent to the outside of the heat exchanger 100 by an external force, and thus the second cover sheet 170 may be fixed to the side panel 141.

Referring to FIG. 9B, the second cover sheet 170 may include a fixing member 175. The fixing member 175 may include a hole that is positioned in each edge of the second cover sheet 170 and may be fastened with the coupling protrusion (e.g., the coupling protrusion 145 of FIG. 9A) included in the side panel 141.

According to an embodiment, when the second cover sheet 170 is coupled to the heat exchanger 100, the coupling protrusion 145 included in the side panel 141 may pass through the hole formed in the fixing member 175. After the coupling protrusion 145 passes through the hole formed in the fixing member 175, the coupling protrusion 145 may be bent to the outside of the heat exchanger 100 by an external force, so that the second cover sheet 170 may be fixed to the side panel 141.

Referring to FIG. 9C, in order for the second cover sheet 170 to be coupled to the heat exchanger 100, the side panel 141 may include a fixing bracket 176. The fixing bracket 176 is formed to be bent in an "L" shape, so that one side thereof may be fixed to the edge of the side panel 141 and another side thereof may be fixed to the second cover sheet 170. The fixing bracket 176 may include a slit formed in the height direction of the heat exchanger 100.

According to an embodiment, the second cover sheet 170 may include a coupling protrusion 178. The coupling protrusion 178 may be formed to protrude from a point of the second cover sheet 170. The coupling protrusion 178 passes through the slit formed in the fixing bracket 176, so that the second cover sheet 170 may be coupled to the side panel 141.

Referring to FIGS. 9A to 9C, when the second cover sheet 170 is fastened to the heat exchanger 100, any one of the fastening methods of FIGS. 9A to 9C may be selected considering rigidity of the detection sensor 180 attached to the second cover sheet 170. For example, when the rigidity of the detection sensor 180 is high, the second cover sheet 170 may be fastened to the heat exchanger 100 by the fastening method of FIG. 9A. For example, when the rigidity of the detection sensor 180 is relatively low, the second cover sheet 170 may be fastened to the heat exchanger 100 in either the fastening method of FIG. 9B or the fastening method of FIG. 9C.

FIG. 10 is a side cross-sectional view illustrating a configuration of a cover sheet 160, 170 (e.g., the first cover sheet 160 or the second cover sheet 170 of FIGS. 3 to 6) and a detection sensor 180 attached to the cover sheet 160, 170 according to an embodiment of the disclosure.

FIG. 11 is a side cross-sectional view illustrating a configuration of a cover sheet 160, 170 and a detection sensor 180 attached to the cover sheet 160, 170 according to an embodiment of the disclosure.

For convenience of description, dimensions of components illustrated in FIGS. 10 and 11 may be exaggerated.

The embodiments of FIGS. 10 and 11 may be selectively combined with the embodiments of FIGS. 5 to 9.

According to an embodiment, the detection sensor 180 may be configured to detect the amount of frost formed on a plurality of fins (e.g., the plurality of fins 120 of FIG. 3) provided inside the heat exchanger (e.g., the heat exchanger 100 of FIG. 3). The detection sensor 180 may be disposed on the front surface or the rear surface of the heat exchanger 100, and may be disposed perpendicular to the direction in which the plurality of fins 120 are arranged.

According to an embodiment, the detection sensor 180 may be attached to one surface of the cover sheets 160 and 170. The detection sensor 180 may be attached to, e.g., the inner surfaces of the cover sheets 160 and 170 adjacent to the heat exchanger 100.

According to an embodiment, the detection sensor 180 may be configured as an electrode layer 183 and one or more protective film layers 182 and 185 form a stacked structure. The electrode layer 183 may be stacked, e.g., in a manner that a layer having a predetermined thickness is attached to one surface of the protective film layer 182, 185 or a material forming the electrode layer 183 is transferred to one surface of the protective film layer 182, 185. The detection sensor 180 may be formed of a conductive material to sense capacitance between the detection sensor 180 and the plurality of fins 120. The protective film layers 182 and 185 may be disposed to cover the front surface and/or the rear surface of the electrode layer 183, thereby protecting the electrode layer 183 from high temperature or from foreign matter such as water and dust.

According to an embodiment, the protective film layers 182 and 185 may be formed of a material having heat resistance and durability. For example, the protective film layers 182 and 185 may be formed of polyimide (PI) or polyethylene terephthalate (PET). However, without limitations thereto, the protective film layers 182 and 185 may be formed of a material having predetermined heat resistance and durability.

According to an embodiment, the material forming the protective film layers 182 and 185 may be determined considering material characteristics such as heat resistance and durability and production costs. Although PI has relatively high heat resistance compared with PET, the material of the protective film layers 182 and 185 may be determined considering that the costs of producing the protective film layers 182 and 185 with PI is relatively high. For example, considering the heat resistance to protect the electrode layer 183 from high temperatures generated from the defrost heater (e.g., the defrost heater 150 of FIG. 3), the protective film layers 182 and 185 may be formed of PI. For example, considering the production costs, the protective film layers 182 and 185 may be formed of PET.

According to an embodiment, the material of the protective film layers 182 and 185 may be determined considering the position of the detection sensor 180. For example, the material of the protective film layers 182 and 185 may be determined considering the distance between the detection sensor 180 and the defrost heater 150. For example, when the detection sensor 180 is disposed adjacent to the defrost heater 150, the material of the protective film layers 182 and 185 may be determined as PI. For example, if the detection sensor 180 is disposed to be spaced apart from the defrost heater 150 by a predetermined distance or more, the material of the protective film layers 182 and 185 may be determined as PET.

According to an embodiment, the electrode layer 183 may be provided to detect the amount of frost formed on a plurality of fins (e.g., the plurality of fins 120 of FIG. 3). For example, the amount of change in capacitance may be detected corresponding to the amount of frost formed on the plurality of fins 120.

According to an embodiment, the electrode layer 183 may be formed of a conductive material. For example, the electrode layer 183 may be formed of any one of graphene, copper, and silver, but is not limited thereto, and may be formed of a conductive metal or nonmetallic material.

According to an embodiment, the electrode layer 183 may be formed in a film form, or the electrode layer 183 may be formed by transferring the material forming the electrode layer 183 to the protective film layers 182 and 185 or the cover sheets 160 and 170.

According to an embodiment, the detection sensor 180 may be configured separately from the cover sheets 160 and 170, so that the detection sensor 180 may be attached to the inner surfaces of the cover sheets 160 and 170 by the adhesive member 186. A description related thereto is given with reference to FIG. 10.

According to an embodiment, the detection sensor 180 may be formed as the electrode layer 183 of the detection sensor 180 is disposed on one surface of the cover sheet 160, 170, and the upper side of the electrode layer 182 is covered with the protective film layer 184. A description related thereto is given with reference to FIG. 11.

Referring to FIG. 10, the detection sensor 180 may be configured by stacking a first protective film layer 182, an electrode layer 183, an adhesive layer 184, and a second protective film layer 185 from the lower side. The detection sensor 180 may be attached to the inner surfaces of the cover sheets 160 and 170. An adhesive member 186 having an adhesive force may be disposed between the detection sensor 180 and the cover sheets 160 and 170. The adhesive member 186 may include an adhesive tape or an adhesive (e.g., OCA).

According to an embodiment, the electrode layer 183 may be disposed on an upper surface of the first protective film layer 182. For example, a material (e.g., any one of graphene, copper, or silver) forming the electrode layer 183 may be applied to the upper surface of the first protective film layer 182. For example, the electrode layer 183 in the form of a film may be attached to the upper surface of the first protective film layer 182.

According to an embodiment, the second protective film layer 185 may cover the first protective film layer 182 and the electrode layer 183 disposed on the first protective film layer 182. To fix the second protective film layer 185 to the upper side of the electrode layer 183, the adhesive layer 183 may be disposed between the electrode layer 183 and the second protective film layer 185. The adhesive layer 183 may be formed of an adhesive tape or an adhesive having a predetermined adhesive force.

According to an embodiment, in the detection sensor 180 shown in FIG. 10, as the first protective film 182 and the second protective film layer 185 are disposed on two opposite side surfaces, respectively, of the electrode layer 183, a function of protecting the detection sensor 180 from high temperature or foreign matter may be provided, and function deterioration due to high temperature or foreign matter may be minimized.

Referring to FIG. 11, the detection sensor 180 may be configured by sequentially stacking an electrode layer 183, an adhesive layer 185, and a protective film layer 185 on the inner surfaces of the cover sheets 160 and 170.

According to an embodiment, the electrode layer 183 may be disposed on the inner surfaces of the cover sheets 160 and 170. For example, the electrode layer 183 may be coated with a material (e.g., graphene, copper, or silver) forming the electrode layer 183 on the upper surfaces of the cover sheets 160 and 170. For example, the electrode layer 183 in a film shape may be attached to the upper surfaces of the cover sheets 160 and 170.

According to an embodiment, the protective film layer 185 may be disposed on the electrode layer 183. To fix the electrode layer 183 and the protective film layer 185, the adhesive layer 184 may be disposed between the electrode layer 183 and the protective film layer 185. The adhesive layer 183 may be formed of an adhesive tape or an adhesive having a predetermined adhesive force.

According to an embodiment, since the protective film layer 185 is disposed on one surface of the electrode layer 183, the detection sensor 180 shown in FIG. 11 may have a relatively low protection function against high temperature or foreign matter compared to the detection sensor 180 shown in FIG. 10. However, since the cover sheets 160 and 170 and the detection sensor 180 are integrated, manufacturing costs may be reduced and ease of manufacture may be secured. Accordingly, the detection sensor 180 of the disclosure may be implemented as any one of the detection sensor 180 of FIG. 10 or the detection sensor 180 of FIG. 11.

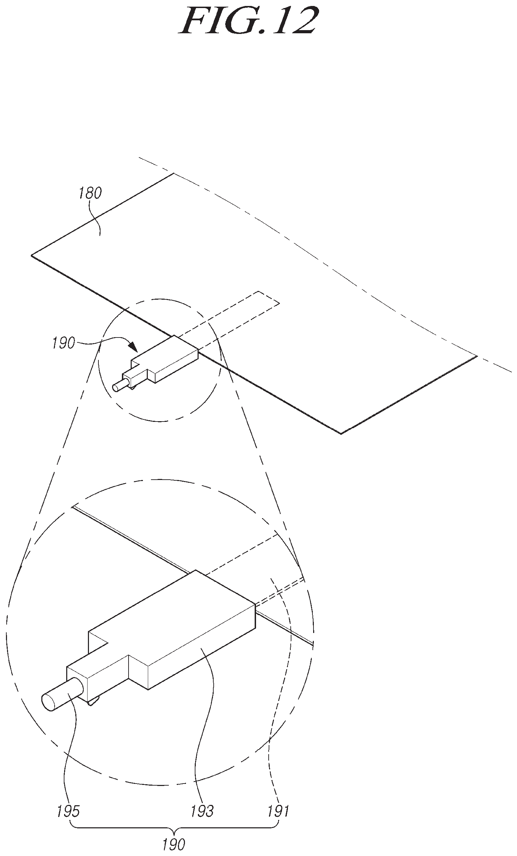

FIG. 12 is a perspective view illustrating a connector 190 connected to one side of a detection sensor (e.g., the detection sensor 180 of FIG. 3) according to an embodiment of the disclosure.

The embodiment of FIG. 12 may be selectively combined with the embodiment of FIGS. 3 to 11.

According to an embodiment, the detection sensor 180 may be electrically connected to a detection circuit assembly (e.g., the detection circuit assembly 200 of FIG. 13). The detection circuit assembly 200 described below may transmit a predetermined electric signal to the detection sensor 180, detect a change in dielectric capacitance between the detection sensor 180 and the detection circuit assembly 200 and, based thereupon, detect the amount of frost buildup. To that end, the connector 190 may electrically connect the detection circuit assembly 200 to the detection sensor 180.

According to an embodiment, the connector 190 may include a terminal 191, a connector housing 193, and a wire 195. The terminal 191 may be disposed on one side of the detection sensor 180 and may be disposed toward the outside of the detection sensor 180. The terminal 191 may be formed of a conductive material. The terminal 191 may be physically and/or electrically connected to the electrode layer (e.g., the electrode layer 183 of FIG. 10).

According to an embodiment, the wire 195 may be connected to one end of the terminal 191. The wire 195 may be physically and/or electrically connected to the terminal 191 to connect the detection circuit assembly 200 and the detection sensor 180.

According to an embodiment, the connector housing 193 may be formed to surround a portion of the terminal 191 and the wire 195. The connector housing 193 may be disposed to surround the point where the terminal 191 and the wire 195 are connected. The connector housing 193 may provide a waterproof function to the area surrounding the terminal 191 and the wire 195.

FIG. 13 is an exploded perspective view illustrating a detection circuit assembly 200 according to an embodiment of the disclosure.

Referring to FIG. 13, the detection circuit assembly 200 may include a detection circuit 210 and a detection circuit housing 220 disposed to surround the outer surface of the detection circuit 210. The detection circuit 210 may obtain sensing information from a detection sensor (e.g., the detection sensor 180 of FIG. 3) and detect the amount of frost formed on the heat exchanger (e.g., the heat exchanger 100 of FIG. 3) based on the sensing information.

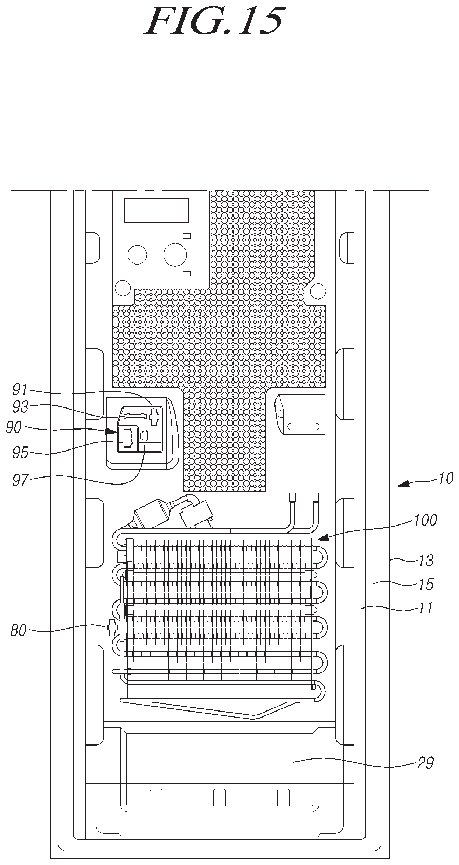

According to an embodiment, the detection circuit housing 220 may include a first housing 221, a second housing 223, and a third housing 225. The detection circuit housing 220 may be formed to protect the detection circuit 210 and be mounted in a first mounting area (e.g., the first mounting area 80 of FIG. 15) or a second mounting area (e.g., the second mounting area 91 of FIG. 15) formed inside the refrigerator 1.

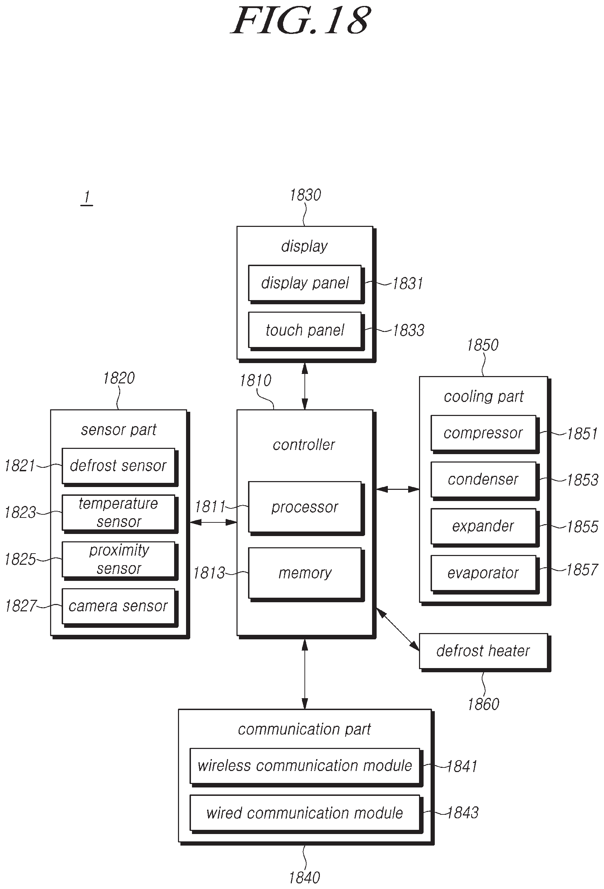

According to an embodiment, the second housing 223 and the third housing 225 may include terminals implemented so that the detection circuit assembly 200 is electrically connected to other components. For example, the terminal included in the second housing 223 may be physically and electrically connected to the processor (e.g., the processor 1811 of FIG. 18) by a wire. For example, the terminal included in the third housing 225 may be physically and electrically connected to a detection sensor (e.g., the detection sensor 180 of FIG. 3) by a wire.

According to an embodiment, the detection circuit 210 may generate a capacitance value corresponding to the amount of frost formed on the heat exchanger (e.g., the heat exchanger 100 of FIG. 3) as an electrical signal based on an electrical signal (e.g., a voltage or current value) obtained by the detection sensor (e.g., the detection sensor 180 of FIG. 4). Based on the electrical signal generated by the detection circuit 210, the controller (e.g., the controller 1810 of FIG. 18) may determine the defrost start time.

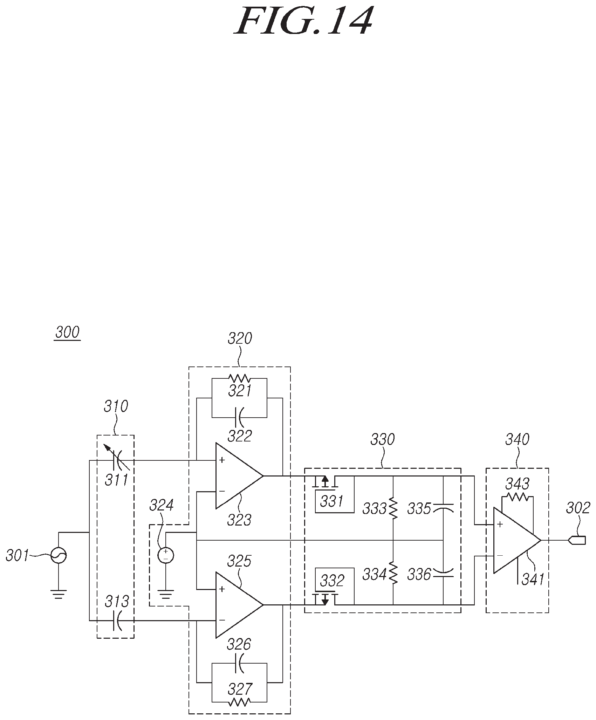

According to an embodiment, the detection circuit 210 may include a circuit board and a plurality of electrical elements disposed on the circuit board. Electrical elements constituting the detection circuit 210 are described below with reference to FIG. 14.

FIG. 14 is a circuit diagram illustrating a detection circuit 300 (e.g., the detection circuit 210 of FIG. 13) according to an embodiment of the disclosure.

The embodiment of FIG. 14 may be selectively combined with the embodiment of FIG. 13.

Referring to FIG. 14, the detection circuit 300 may include a plurality of electrical elements. The circuit configuration shown in FIG. 14 illustrates an example of a circuit for detecting capacitance by the detection circuit 300 based on an electrical signal obtained by a detection sensor (e.g., the detection sensor 180 of FIG. 5) but, without limitations thereto, the detection circuit 300 may be configured by combining various electrical elements.

According to an embodiment, the detection circuit 300 may include a capacitor unit 310, a current amplification unit 320, a rectification unit 330, and a measurement amplification unit 340.

According to an embodiment, the detection circuit 300 may receive power by an input power source 301. The input power source 301 may be implemented as an AC power source.

According to an embodiment, the capacitor unit 310 may include a first capacitor 311 and a second capacitor 313. For example, the first capacitor 311 may be formed of a variable capacitor. An electrical signal about a dielectric constant of a medium present between the detection sensor (e.g., the detection sensor 180 of FIG. 5) and the detection circuit 300 may be detected through the first capacitor 311. The second capacitor 313 having a variable dielectric constant as a reference capacitor may be provided for a change value of the dielectric constant detected by the first capacitor 311. For example, the detection circuit 300 may detect the amount of frost formed on the heat exchanger 100 based on the value of the change in dielectric capacitance detected through the first capacitor 311 and the second capacitor 313.

According to an embodiment, the current amplification unit 320 may be configured to amplify the current signal input from the capacitor unit 310. The current amplification unit 320 may include a first amplifier 323, a first resistor 321, a first capacitor 322, a second amplifier 325, a second resistor 327, a second capacitor 326, and a reference voltage 324.

According to an embodiment, the reference voltage 324 may be connected to the ground terminal. The ground terminal may be electrically connected to a plurality of fins (e.g., the plurality of fins 120 of FIG. 3).

According to an embodiment, the detection circuit 210 may be electrically connected to each of the detection sensor 180 and the plurality of fins 120. The detection circuit 210 may be configured to detect a capacitance between the detection sensor 180 and the plurality of fins 120. For example, the detection circuit 210 may detect a variable capacitance value corresponding to the amount of frost formed between the plurality of fins 120, and the refrigerator 1 may determine the defrost time by determining the amount of frost formed on the heat exchanger (e.g., the heat exchanger 100 of FIG. 3) based on the capacitance value.

According to an embodiment, the rectification unit 330 may be configured to rectify an alternating current (AC) electric signal input from the current amplification unit 320 into a direct current (DC) electric signal. The rectifier 330 may include a first switching circuit 331, a third resistor 333, a third capacitor 335, a second switching circuit 332, a fourth resistor 334, and a fourth capacitor 336. The first switching circuit 331 and the second switching circuit 334 may be implemented as PMOS diodes.

According to an embodiment, the measurement amplification unit 340 may be configured to amplify the signal input from the rectification unit 330 and output the amplified signal to the output terminal 302 of the detection circuit 300. The measurement amplification unit 340 may include a third amplifier 341 and a fifth resistor 343.

FIG. 15 is a cross-sectional view of a refrigerator (e.g., the refrigerator 1 of FIG. 1) for illustrating an area where a detection circuit assembly 200 (e.g., the detection circuit assembly 200 of FIG. 13) is mounted according to an embodiment of the disclosure.

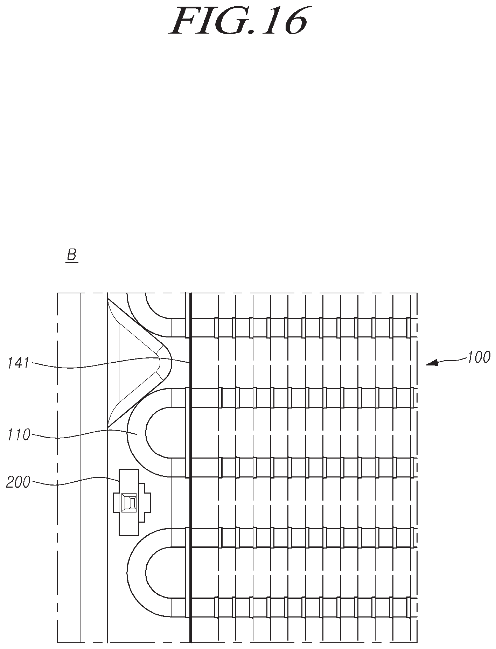

FIG. 16 is an enlarged view illustrating an area where a detection circuit assembly 200 is mounted when the detection circuit assembly 200 is mounted in a first mounting area 80 according to an embodiment of the disclosure.

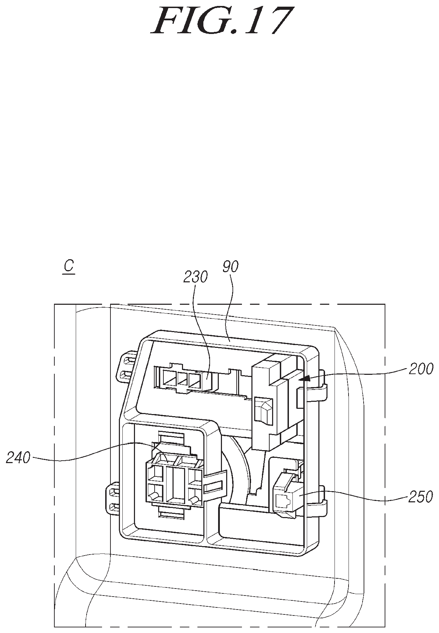

FIG. 17 is an enlarged view illustrating an area where a detection circuit assembly 200 is mounted when the detection circuit assembly 200 is mounted in a second mounting area (e.g., the second mounting area 91 of FIG. 15) according to an embodiment of the disclosure.

FIG. 15 may be understood as a cross-sectional view of a state in which a portion of the front surface of the refrigerator 1 is cut out so that a heat exchanger (e.g., the heat exchanger 100 of FIG. 3) of the refrigerator 1 is visible. FIG. 15 is a cross-sectional view illustrating the first mounting area 80 and the second mounting area 91 for mounting the detection circuit assembly 200, and some components may be omitted according to convenience of description.

The embodiment of FIG. 15 may be selectively combined with the embodiments of FIGS. 1 to 14, and the embodiments of FIGS. 16 and 17 may be selectively combined with the embodiment of FIG. 15.

Referring to FIGS. 15 to 17, a first mounting area 80 or a second mounting area 91 for mounting the detection circuit assembly 200 may be provided in the inner case 11 (e.g., the inner case 11 of FIG. 1) of the refrigerator 1. The second mounting area 91 may be formed by cutting or depressing a portion of the connector housing 90. The connector housing 90 may be provided to fix terminals connecting various electrical components (e.g., the display, compressor, heater, and sensors) mounted on the refrigerator 1.

According to an embodiment, the first mounting area 80 may be formed in a predetermined area of the inner case 11 adjacent to any one of the side panels (e.g., the side panels 40 and 41 of FIG. 3) of the heat exchanger 100. The first mounting area 80 may be formed by cutting or depressing a portion of the inner case 11.

According to an embodiment, the connector housing 90 may be provided to fix terminals connecting various electrical components mounted on the refrigerator 1. The connector housing 90 may include, e.g., a second mounting area 91, a first connector mounting area 93, a second connector mounting area 95, and a third connector mounting area 97. The first connector mounting area to the third connector mounting area 93, 95, and 97 may have a shape corresponding to the shape of the connector to be mounted in each area.

According to an embodiment, the first connector 230 may be mounted in the first connector mounting area 93. The second connector 240 may be mounted in the second connector mounting area 95. The third connector 250 may be mounted in the third connector mounting area 97.

According to an embodiment, the connector housing 90 may be disposed at a place spaced apart from the heat exchanger 100 by a predetermined distance. For example, the connector housing 90 may be disposed on an upper side of the heat exchanger 100.

According to an embodiment, the detection circuit assembly 200 may be mounted in any one of the first mounting area 80 and the second mounting area 91. The position where the detection circuit assembly 200 is mounted in the first mounting area 80 or the second mounting area 1 may be selected considering the accuracy of the signal detected by the detection sensor 180 or the durability of the detection sensor 180.

For example, when the detection circuit assembly 200 is mounted in the first mounting area 80, the accuracy of the detection sensor 180 may be increased because the separation distance between the detection sensor 180 and the detection circuit assembly 200 is relatively short. For example, as the separation distance between detection sensor 180 and detection circuit assembly 200 is relatively short, relatively fewer noise signals may be synthesized when electrical signals sensed by detection sensor 180 are input to the detection circuit assembly 200. However, when the detection circuit assembly 200 is mounted in the first mounting area 80, the durability of the detection circuit assembly 200 may be reduced due to frost formed on the heat exchanger 100 or water droplets generated when the frost melts.

For example, when the detection circuit assembly 200 is mounted in the second mounting area 91, the accuracy of the detection sensor 180 may be reduced due to the relatively long separation distance between the detection sensor 180 and the detection circuit assembly 200. However, as the detection circuit assembly 200 is spaced apart from the heat exchanger 100 by a predetermined position and disposed on the upper side of the heat exchanger 100, the detection circuit assembly 200 may not be damaged or may suffer relatively little damage due to frost formed on the heat exchanger 100 or water droplets generated as frost melts.

According to an embodiment, a plurality of detection circuit assemblies 200 may be provided to be mounted in both the first mounting area 80 and the second mounting area 91. When a plurality of detection circuit assemblies 200 are provided, they may be connected to the plurality of detection sensors 180, respectively, to detect a capacitance corresponding to the amount of frost based on the electrical signal obtained by each detection sensor 180.

FIG. 18 is a block diagram illustrating a configuration of a refrigerator 1 (e.g., the refrigerator 1 of FIG. 1) according to an embodiment of the disclosure.

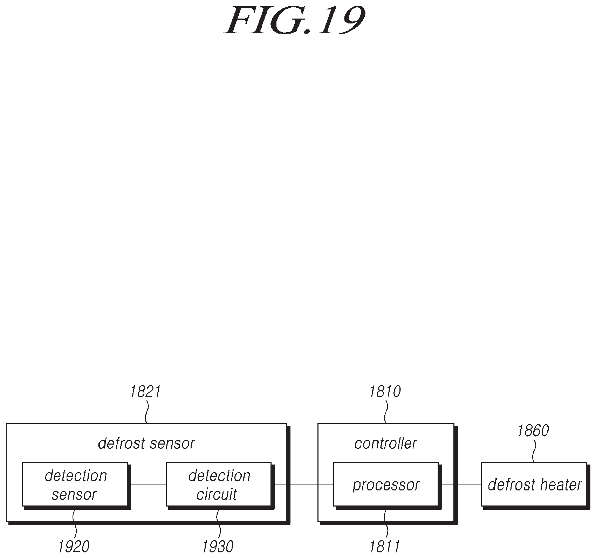

FIG. 19 is a block diagram illustrating a refrigerator 1 configured to remove frost formed on a heat exchanger (e.g., the heat exchanger 100 of FIG. 3) according to an embodiment of the disclosure.

Some of the components of the refrigerator 1 shown in FIGS. 18 and 19 may be omitted as necessary, and the refrigerator 1 may further include components not shown in FIG. 18.

The embodiments of FIGS. 18 and 19 may be selectively combined with the embodiments of FIGS. 1 to 17.

Referring to FIGS. 18 and 19, the refrigerator 1 may include a controller 1810, a sensor unit 1820, a display 1830, a communication part 1840, a cooling part 1850, and a defrost heater 1860.

According to an embodiment, the sensor unit 1820 may include a defrost sensor 1821, a temperature sensor 1823, a proximity sensor 1825, a camera sensor 1827, and a door opening/closing sensor (not shown).

According to an embodiment, the defrost sensor 1821 may sense the amount of frost formed around the heat exchanger (e.g., the heat exchanger 100 of FIG. 3) of the refrigerator 1. The defrost sensor 1821 may sense the amount of frost formed on a plurality of fins (e.g., the plurality of fins 120 of FIG. 3) included in the heat exchanger 100.

According to an embodiment, the defrost sensor 1821 may include a detection sensor 1920 (e.g., the detection sensor 180 of FIG. 5) and a detection circuit 1930 (e.g., the detection circuit 210 of FIG. 13), and may detect capacitance based on an electric signal input to the detection sensor 180 and the detection circuit 210.

According to an embodiment, the temperature sensor 1823 may sense the temperature around the refrigerator 1 or inside the refrigerator 1. For example, the temperature sensor 1823 may include a plurality of temperature sensors for sensing the temperature inside the storage room (e.g., the storage room 20 of FIG. 1). For example, the temperature sensor 1823 may include a plurality of temperature sensors for sensing the external temperature around the refrigerator 1.

For example, the plurality of temperature sensors may be installed in the plurality of storage rooms 20, respectively, to sense the temperature of each of the plurality of storage rooms 20 and output an electrical signal corresponding to the sensed temperature to the controller 1810. Each of the plurality of temperature sensors may include a thermistor whose electrical resistance changes according to temperature.

According to an embodiment, the proximity sensor 1825 may be a sensor that detects whether a distance to a person or an object is close within a predetermined distance by detecting a change in distance from a person or an object. For example, the proximity sensor 1825 may identify the user's approach and detect the distance between the user and the refrigerator 1. For example, the proximity sensor 1825 may detect the distance between the door 30 and the external object (e.g., the user) and transfer a value determined according to a designated distance to the processor 1811.

For example, the proximity sensor 1825 may include at least one of an infrared sensor, an ultrasonic sensor, a capacitive sensor, and an inductive sensor.

According to an embodiment, the camera sensor 1827 may be a sensor that generates a digital image by converting light collected in a sensing area into an electrical signal. For example, the camera sensor 1827 may photograph objects around the refrigerator 1 or inside the refrigerator 1 and generate a digital image.

For example, the camera sensor 1827 may include at least one of a complementary metal-oxide-semiconductor (CMOS) sensor, a charge-coupled device (CCD) sensor, an IR camera, and an RGB camera.

According to an embodiment, the display 1830 may include a display panel 1831 configured to provide a screen to a user, and a touch panel 1833 configured to detect a touch input from the user.

According to an embodiment, the communication part 1840 may exchange data with external devices such as the server device and/or the user device and/or the display 200 and/or the cooking device.

According to an embodiment, the communication part 1840 may include a wired communication module 1841 for wiredly exchanging data with external devices and a wireless communication module 1843 for wirelessly exchanging data with external devices.

According to an embodiment, the wired communication module 1841 may access a wired communication network and communicate with external devices through the wired communication network. For example, the wired communication module 1841 may access the wired communication network through Ethernet (Ethernet, IEEE 802.3 technology standard) and receive data from the external devices through the wired communication network.

According to an embodiment, the wireless communication module 1843 may wirelessly communicate with a base station or an access point (AP), and may access the wired communication network through the base station or the access point. The wireless communication module 1843 may also communicate with the external devices connected to the wired communication network via the base station or the access point. For example, the wireless communication module 1843 may wirelessly communicate with the access point (AP) using Wi-Fi (IEEE 802.11 technology standard), or communicate with the base station using CDMA, WCDMA, GSM, long term evolution (LET), or Wi-Bro. The wireless communication module 1843 may also receive data from the external devices via the base station or the access point. Further, the wireless communication module 1843 may directly communicate with the external devices. For example, the wireless communication module 1843 may receive data wirelessly from the external devices using Wi-Fi, Bluetooth (IEEE 802.15.1 technology standard), ZigBee (IEEE 802.15.4 technology standard), etc.

According to an embodiment, the communication part 1840 may transmit or receive data with the external devices, and in particular, may receive video data including video and/or audio from the external devices and output the received data to the controller 1810.

According to an embodiment, the cooling part 1850 may supply cooled air to the storage room. Specifically, the cooling part 1850 may maintain the temperature of the storage room within a range designated by the user using the circulation of the refrigerant in the refrigerant circuit.

According to an embodiment, the cooling part 1850 may include a compressor 1851 (e.g., the compressor 51 of FIG. 2) for compressing the gaseous refrigerant, a condenser 1853 for converting the compressed gaseous refrigerant into a liquid state, an expander 1855 for decompressing the liquid refrigerant, and an evaporator 1857 for converting the decompressed liquid refrigerant into a gaseous state. The cooling part 1850 may cool the air in the storage room using the phenomenon in which the liquid refrigerant absorbs thermal energy of the surrounding air while converting to the gaseous state.

However, the cooling part 1850 is not limited as including a refrigerant circuit. For example, the cooling part 1850 may include a Peltier element using the Peltier effect or a magnetic cooling material using a magnetic thermal effect.

According to an embodiment, the defrost heater 1860 (e.g., the defrost heater 150 of FIG. 3) may be disposed around the heat exchanger 100 to heat the heat exchanger 100 to a predetermined temperature. The defrost heater 1860 may be driven by a control signal transmitted by the controller 1810. For example, the defrost heater 1860 may be driven to be turned on (switched on) or turned off (switched off) by a signal transmitted by the controller 1810.

According to an embodiment, a plurality of defrost heaters 1860 may be provided. When a plurality of defrost heaters 1860 are provided, the defrost heaters 1860 disposed around the heat exchanger 100 may heat areas around the heat exchanger 100. The controller 1810 may control to independently transmit a driving signal to each defrost heater 1860 to drive each defrost heater 1860.

According to an embodiment, the controller 1810 may process user input and/or door opening/closing detection data and/or communication data, and control the components included in the refrigerator 1 based on data processing.

According to an embodiment, the controller 1810 includes a memory 1813 that stores/records programs and/or data, and a processor 1811 that processes user input and/or door opening/closing detection data and/or communication data according to the program and/or data stored in the memory 1813.

According to an embodiment, the memory 1813 may store/memory a program and/or data. The program includes a plurality of instructions combined to perform a specific function, and the data may be processed and/or treated by a plurality of instructions included in the program. Further, the program and/or data may include system programs and/or system data directly related to the operation of the refrigerator 1, and application programs and/or application data that provide convenience to the user.

According to an embodiment, the memory 1813 may include a non-volatile memory storing a program and/or data for controlling the components included in the refrigerator 1 and a volatile memory storing temporary data generated during controlling the components included in the refrigerator 1.

According to an embodiment, the non-volatile memory may store programs and/or data, e.g., electrically, magnetically or optically. The non-volatile memory may include, e.g., a read only memory or flash memory for storing data for a long time. The non-volatile memory may also include a solid state drive (SSD), a hard disk drive (HDD), or an optical disc drive (ODD).

According to an embodiment, the volatile memory may load the program and/or data from the non-volatile memory, e.g., and may electrically store the program and/or data. The volatile memory may include, e.g., static random access memory (S-RAM) and dynamic random access memory (D-RAM) for temporarily storing data.

The memory 1813 may store/record programs and data such as operating systems (OS), middleware, and applications, and may provide the programs and data to the processor 1811 in response to a request of the processor 1811.

According to an embodiment, the processor 1811 may process a user input of the display 1830 and detection data of the sensor unit 1820, driving data of the cooling part 1850, and/or communication data of the communication part 1840 according to the program and/or data stored/recorded in the memory 1813. The processor 1811 may generate a control signal for controlling the sensor operation of the sensor unit 160, the driving of the door driver 150, and the operation of the communication part 1840 based on data processing.

According to an embodiment, the processor 1811 may determine when to start the defrost cycle or when to end the defrost cycle. The time when the defrost cycle is initiated may be referred to as a "defrost start time," and the time when the defrost cycle is terminated may be referred to as a "defrost end time." The processor 1811 may turn on the defrost heater 1860 in response to arriving at the defrost start time. The processor 1811 may turn off the defrost heater 1860 in response to arriving at the defrost end time.

According to an embodiment, the processor 1811 may obtain information detected by the defrost sensor 1821. The information detected by the defrost sensor 1821 may be referred to as "sensing information". The processor 1811 may transmit an electric signal to the defrost sensor 1821 at predetermined time intervals to obtain sensing information. The defrost sensor 1821 may detect a capacitance value around the heat exchanger 100 using the transmitted electric signal. For example, the sensing information may indicate the capacitance value detected by the defrost sensor 1821. The defrost sensor 1821 may transmit the capacitance value detected at a predetermined time period to the processor 1811. For example, the predetermined time period may be 30 to 300 seconds.

According to an embodiment, the processor 1811 may generate a plurality of data for determining the defrost start time (or defrost end time) based on the sensing information obtained from the defrost sensor 1821. For example, the processor 1811 may generate the plurality of data by processing sensing information.

According to an embodiment, the processor 1811 may preprocess sensing information. For example, the processor 1811 may calculate valid data among the pieces of sensing information and process the valid data using interpolation. The processor 1811 may correct an initial value of the processed data to 0 and calculate a moving average. Data obtained before pre-processing by the processor 1811 may be referred to as "pre-processed data," and data generated by pre-processing by the processor 1811 may be referred to as "post-processed data."

According to an embodiment, the processor 1811 may generate a plurality of data for determining the defrost start time or the defrost end time based on the post-processed data. The plurality of data may include, e.g., first data, second data, and third data.

According to an embodiment, the first data may indicate the amount of frost formed on the heat exchanger 100 at a specific time. For example, a larger value indicated by the first data may be understood as a larger amount of frost formed on the heat exchanger 100, and a smaller value indicated by the first data may be understood as a smaller amount of frost formed on the heat exchanger 100.

According to an embodiment, the second data may indicate an increase (or decrease) amount of frost formed on the heat exchanger 100 over time. For example, a larger absolute value of the value indicated by the second data may be understood as faster buildup of the frost on the heat exchanger 100, and a smaller absolute value of the value indicated by the second data may be understood as slower buildup of the frost on the heat exchanger 100.

According to an embodiment, the third data may indicate the total amount of frost formed on the heat exchanger 100 up to a specific time. For example, a larger value indicated by the third data may be understood as a larger total amount of the frost accumulated on the heat exchanger 100, and a smaller value indicated by the third data may be understood as a smaller total amount of the frost accumulated on the heat exchanger 100.

According to an embodiment, the processor 1811 may determine the defrost start time (or defrost end time) based on at least one of the first to third data. To that end, the processor 1811 may compare each of the first to third data with first to third threshold values. The first to third threshold values are preset values and may be stored in the memory 1810. For example, the processor 1811 may determine when the first data exceeds the first threshold value, when the second data exceeds the second threshold value, or when the third data exceeds the third threshold value as the defrost start time, based on the first data, the second data, and the third data.

According to an embodiment, the processor 1811 may determine when at least two of the first to third data meet a threshold condition as the defrost start time. For example, the processor 1811 may determine when the first data exceeds the first threshold value and the second data exceeds the second threshold value as the defrost start time based on the first data and the second data. For example, the processor 1811 may determine when the first data exceeds the first threshold value and the third data exceeds the third threshold value as the defrost start time based on the first data and the third data. For example, the processor 1811 may determine when the second data exceeds the second threshold value and the third data exceeds the third threshold value as the defrost start time based on the second data and the third data.

According to an embodiment, the processor 1811 may determine when all of the first to third data meet a threshold condition as the defrost start time. For example, the processor 1811 may determine when all of the first data, the second data, and the third data exceed the respective threshold values as the defrost start time.

According to an embodiment, the processor 1811 may determine the defrost start time further considering the driving time of the compressor 1851. For example, the processor 1811 may determine when the compressor driving time exceeds a preset threshold value as the defrost start time further considering the compressor driving time which is the total time when the compressor has been driven with the defrost heater 1860 turned off.

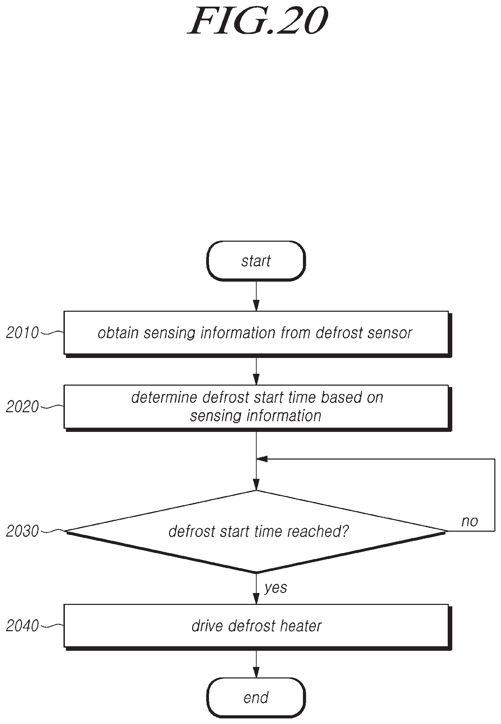

According to an embodiment, the processor 1811 may turn on the defrost heater 1860 in response to arriving at the defrost start time. A control flowchart for driving the defrost heater 1860 by the refrigerator 1 is described below with reference to FIG. 20.

FIG. 20 is a flowchart illustrating control for a refrigerator (e.g., the refrigerator 1 of FIG. 1 or 18) to determine a defrost start time to drive a defrost heater (e.g., the defrost heater 150 of FIG. 3 or the defrost heater 1860 of FIG. 18) according to an embodiment of the disclosure.

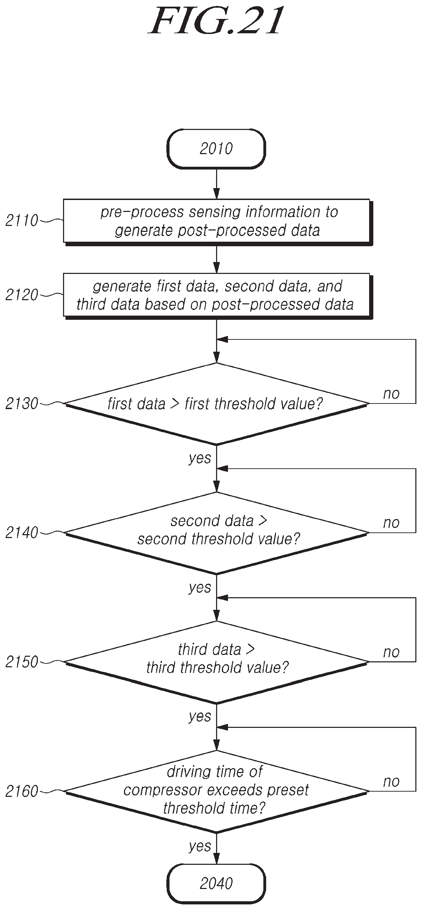

FIG. 21 is a flowchart illustrating control for a refrigerator 1 to determine a defrost start time to drive a defrost heater 1860 according to an embodiment of the disclosure.

The embodiments of FIGS. 20 and 21 may be selectively combined with the embodiments of FIGS. 18 and 19.

Some of the steps shown in FIGS. 20 and 21 may be omitted or repeatedly performed as necessary, and some of the steps shown may be performed in a different order.

Referring to FIGS. 20 and 21, in step 2010, the refrigerator 1 may obtain sensing information from a detection sensor (e.g., the detection sensor 180 of FIG. 5 or the defrost sensor 1821 of FIG. 18). The refrigerator 1 may transmit an electric signal to the defrost sensor 1821 at predetermined time intervals to obtain sensing information. The defrost sensor 1821 may detect a capacitance value around the heat exchanger 100 using the transmitted electric signal. For example, the sensing information may indicate the capacitance value detected by the defrost sensor 1821. The defrost sensor 1821 may transmit the capacitance value detected at a predetermined time period to the processor 1811. For example, the predetermined time period may be 30 to 300 seconds.

According to an embodiment, in step 2020, the refrigerator 1 may determine the defrost start time based on sensing information.

According to an embodiment, step 2020 may correspond to all or some of steps 2110 and 2120 of FIG. 21.

According to an embodiment, in step 2110, the refrigerator 1 may generate post-processed data based on sensing information obtained from the defrost sensor 1821. The refrigerator 1 may pre-process sensing information to select valid data, and generate post-processed data using a moving average method for the selected valid data.

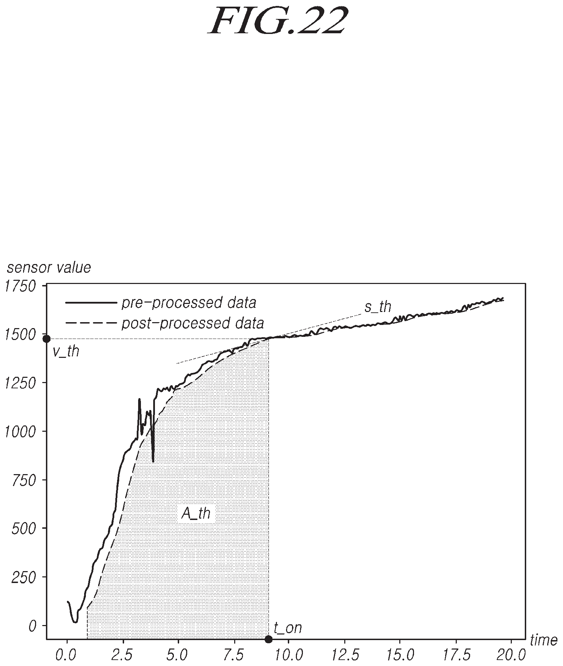

According to an embodiment, in step 2120, the refrigerator 1 may generate first data, second data, and third data based on the post-processed data. For example, the first data may indicate the amount of frost formed on the heat exchanger 100 at a specific time. The second data may indicate an increase (or decrease) amount of frost formed on the heat exchanger 100 according to a time change. The third data may indicate the total amount of frost formed on the heat exchanger 100 up to a specific time. A description related thereto is given below with reference to the graph of FIG. 22.

According to an embodiment, in step 2030, the refrigerator 1 may determine whether a defrost start time, which is a time for driving the defrost heater 1860, is reached based on the first to third data. Step 2030 of FIG. 20 may correspond to all or some of steps 2130 to 2160 of FIG. 21. In determining whether the defrost start time has been reached by the refrigerator 1, only some of steps 2130 to 2160 may be used, or all of steps 2130 to 2160 may be used.

According to an embodiment, in step 2130, the refrigerator 1 may determine whether the first data exceeds the first threshold value. In step 2140, the refrigerator 1 may determine whether the second data exceeds the second threshold value. In step 2150, the refrigerator 1 may determine whether the third data exceeds the third threshold value.

According to an embodiment, in step 2160, the refrigerator 1 may determine the defrost start time considering the time when the compressor (e.g., the compressor 51 of FIG. 2 or the compressor 1851 of FIG. 18) is driven. When a preset condition is met in steps 2130 to 2150, the refrigerator 1 may determine the defrost start time only when the time when the compressor 1851 is driven exceeds a threshold time.

According to an embodiment, the refrigerator 1 may drive the defrost heater 1860 in response to arriving at the defrost start time in step 2040. The refrigerator 1 may transmit a switching signal to the defrost heater 1860 to turn on the defrost heater 1860.

According to an embodiment, the refrigerator 1 may detect the amount of frost formed on the heat exchanger 100 and adaptively drive the defrost heater 1860 in response to the amount of frost, thereby efficiently using the electric energy consumed to drive the defrost heater 1860. Further, by driving the defrost heater 1860 in response to the amount of frost formed, the cooling performance of the cooling part (e.g., the cooling part 1850 of FIG. 18) against frost may be efficiently maintained.

FIG. 22 is a graph illustrating a plurality of data generated based on sensing data for a refrigerator 1 to determine a defrost start time. The horizontal axis of the graph may represent time (unit: hour), and the vertical axis may represent the sensor value sensed by the sensor.

The embodiment of FIG. 22 may be selectively combined with the embodiment of FIGS. 18 to 21.

Referring to FIG. 22, the refrigerator 1 (or the processor (e.g., the processor 1811 of FIG. 18)) may generate post-processed data by processing pre-processed data obtained from the defrost sensor (e.g., the defrost sensor 1821 of FIG. 18). In the graph shown in FIG. 22, the solid line may indicate the pre-processed data, and the dashed line may indicate the post-processed data.

According to an embodiment, the refrigerator 1 may generate first data, second data, and third data based on post-processed data. The refrigerator 1 may determine the defrost start time based on the first to third data.

According to an embodiment, the first data may indicate the amount of frost formed on the heat exchanger 100 at a specific time. In FIG. 22, the first data may be indicated as the y value of post-processed data at a specific time. For example, a larger value indicated by the first data may be understood as a larger amount of frost formed on the heat exchanger 100, and a smaller value indicated by the first data may be understood as a smaller amount of frost formed on the heat exchanger 100.

According to an embodiment, the second data may indicate an increase (or decrease) amount of frost formed on the heat exchanger 100 over time. In FIG. 22, the second data may be indicated by the slope of the post-processed data at a specific time. For example, a larger absolute value of the value indicated by the second data may be understood as faster buildup of the frost on the heat exchanger 100, and a smaller absolute value of the value indicated by the second data may be understood as slower buildup of the frost on the heat exchanger 100.

According to an embodiment, the third data may indicate the total amount of frost formed on the heat exchanger 100 up to a specific time. In FIG. 22, the third data may be indicated as the area of post-processed data from an initial time to a specific time. For example, a larger value indicated by the third data may be understood as a larger total amount of the frost accumulated on the heat exchanger 100, and a smaller value indicated by the third data may be understood as a smaller total amount of the frost accumulated on the heat exchanger 100.

According to an embodiment, it may be understood that the dashed-line graph represented by the post-processed data has a trend of increasing the amount of frost (e.g., first data) formed on the heat exchanger 100 over time, the speed of frost buildup on the heat exchanger 100 over time (e.g., second data) has a trend of decreasing, and the total amount of frost formed on the heat exchanger 100 over time (e.g., third data) has a trend of increasing.

According to an embodiment, the refrigerator 1 may determine the defrost start time based on the first to third data. In FIG. 22, the defrost start time is indicated as t_on.

According to an embodiment, it may be understood that at the defrost start time t_on, it is a time when the first data exceeds the first threshold v_th, the second data exceeds the second threshold s_th, and the third data exceeds the third threshold A_th. The refrigerator 1 may turn on the defrost heater (e.g., the defrost heater 150 of FIG. 3 or the defrost heater 1860 of FIG. 18) in response to arriving at the defrost start time t_on.

FIG. 23 is a flowchart illustrating control for a refrigerator (e.g., the refrigerator 1 of FIG. 1 or 18) to determine a defrost start time to drive a defrost heater (e.g., the defrost heater 150 of FIG. 3 or the defrost heater 1860 of FIG. 18) according to an embodiment of the disclosure. FIG. 23 may be understood as a control flowchart when a plurality of detection sensors (e.g., the detection sensor 180 of FIG. 5) and one defrost heater 1860 are provided.

The embodiment of FIG. 23 may be selectively combined with the embodiment of FIGS. 20 to 22.

Referring to FIG. 23, in step 2310, the refrigerator 1 may obtain sensing information from the plurality of detection sensors 180. For example, the refrigerator 1 may obtain first sensing information from detection sensor #1, second sensing information from detection sensor #2,......, nth sensing information from detection sensor #n.

According to an embodiment, in step 2320, the refrigerator 1 may determine the defrost start time based on each of the pieces of sensing information obtained from the plurality of detection sensors 180. For example, the refrigerator 1 may determine the defrost start time based on the first sensing information to the nth sensing information. The refrigerator 1 may generate first to third data for each detection sensor 180 by processing each of the first sensing information to the nth sensing information.

According to an embodiment, the refrigerator 1 may determine the defrost start time by determining whether the first to third data generated based on sensing information obtained from a specific detection sensor among the plurality of detection sensors 180 exceed the first to third threshold values. For example, the refrigerator 1 may generate first to third data with the second sensing information sensed from detection sensor #2 among the plurality of detection sensors 180, and determine whether the first to third data exceed the first to third thresholds, respectively.

According to an embodiment, in step 2330, the refrigerator 1 may determine whether processing data generated based on sensing information obtained from a specific detection sensor among the plurality of detection sensors 180 exceeds a threshold value. For example, the refrigerator 1 may generate processed data based on sensing information obtained by any one of the plurality of detection sensors 180, and determine when the processed data exceeds a preset threshold value as the defrost start time. However, without limitations thereto, when data generated based on the sensing information obtained by m (where m is assumed to be a natural number smaller than n) detection sensor among the plurality of detection sensors 180 exceeds a preset threshold may be determined as the defrost start time.

According to an embodiment, in step 2340, the refrigerator 1 may turn on the defrost heater 1860 in response to arriving at the defrost start time.

According to an embodiment, the refrigerator 1 may secure detection sensitivity or detection accuracy in determining the defrost start time by driving and controlling one defrosting heater 1860 based on sensing information obtained from the plurality of detection sensors 180.

FIG. 24 is a flowchart illustrating control for a refrigerator (e.g., the refrigerator 1 of FIG. 1 or 18) to determine a defrost start time to drive a defrost heater (e.g., the defrost heater 150 of FIG. 3 or the defrost heater 1860 of FIG. 18) according to an embodiment of the disclosure. FIG. 23 may be understood as a control flowchart when a plurality of detection sensors (e.g., the detection sensor 180 of FIG. 5) and a plurality of defrost heater 1860 are provided.

For convenience of description, it is assumed that the number of detection sensors 180 is the same as the number of defrost heaters 1860. Further, it is assumed that the defrosting heaters 1860 driven according to the detection sensors 180 are matched.

The embodiment of FIG. 24 may be selectively combined with the embodiment of FIGS. 20 to 23.

Referring to FIG. 24, in step 2410, the refrigerator 1 may obtain sensing information from the plurality of detection sensors 180. For example, the refrigerator 1 may obtain first sensing information from detection sensor #1, second sensing information from detection sensor #2,......, nth sensing information from detection sensor #n.

According to an embodiment, in step 2420, the refrigerator 1 may determine the defrost start time of each defrost heater 1860 based on each of the pieces of sensing information obtained from the plurality of detection sensors 180. For example, the refrigerator 1 may determine the defrost start time based on the first sensing information to the nth sensing information. The refrigerator 1 may generate first to third data for each detection sensor 180 by processing each of the first sensing information to the nth sensing information.

According to an embodiment, the refrigerator 1 may determine the defrost start time for each defrost heater by determining whether the first to third data generated based on sensing information obtained from a specific detection sensor among the plurality of detection sensors exceed the first to third threshold values. For example, the refrigerator 1 may generate first to third data with the second sensing information sensed from detection sensor #2 among the plurality of detection sensors 180, and determine whether the first to third data exceed the first to third thresholds, respectively.

According to an embodiment, in step 2440, the refrigerator 1 may turn on the defrost heater 1860 adjacent to the detection sensor 180 indicating that the defrost start time is reached in response to arriving at the defrost start time. For example, if the refrigerator 1 indicates that the defrost start time of a specific detection sensor 180 among the plurality of detection sensors 180 is reached, the refrigerator 1 may independently turn on the defrost heater 1860 matched to the corresponding detection sensor 180.

According to an embodiment, the refrigerator 1 may independently drive and control the defrost heater 1860 matched to each detection sensor 180 from the plurality of detection sensors 180, driving and controlling the defrost heater 1860 in response to the amount of frost formed in each partitioned area of the heat exchanger 100. Accordingly, the refrigerator 1 may reduce energy required for defrosting and secure refrigeration efficiency by driving the defrost heater 1860 only in an area requiring heating in the heat exchanger 100.

The refrigerator 1 according to an embodiment of the disclosure relates to a control method for driving the defrost heater 150 or 1860 by detecting the amount of frost formed.

The refrigerator 1 according to an embodiment of the disclosure may include a cover sheet 160; 170 to prevent damage caused by heat generated from the defrost heater 150; 1860. A detection sensor 180 for detecting the amount of frost formed on the heat exchanger 100 may be attached to the inner surface of the cover sheets 160 and 170. The detection sensor 180 may detect the amount of frost formed based on the amount of change in capacitance output in response to the amount of frost. The refrigerator 1 may drive and control the defrost heater 150; 1860 in response to the amount of frost formed based on the sensing information sensed by the detection sensor 180.

The refrigerator 1 according to an embodiment of the disclosure may detect the amount of frost formed on the heat exchanger 100 and drive and control the defrost heater 150; 1860 in response to the detected amount of frost, thereby reducing energy required during defrosting and securing cooling efficiency.

The refrigerator 1 according to an embodiment of the disclosure may detect the amount of frost formed on the heat exchanger 100 using a single detection sensor 180. The refrigerator 1 may detect a capacitance between the detection sensor 180 and the heat exchanger from the detection circuit 210 connected to each of the plurality of fins, determine the amount of frost based on the value of the capacitance, and determine the defrost start time.

The refrigerator 1 according to an embodiment of the disclosure may secure a space inside the refrigerator 1 by detecting the amount of frost formed on the heat exchanger 100 using a single detection sensor 180.

The refrigerator 1 according to an embodiment of the disclosure may reduce energy required during defrosting by detecting the amount of frost formed in each partitioned area of the heat exchanger 100 using a plurality of detection sensors 180, and operate the defrost heater 150 in response to the detected amount of frost in each area.

A home appliance (e.g., the refrigerator 1 of FIG. 1) according to an embodiment of the disclosure may comprise a storage room 20, a cooling part 1850 configured to supply cold air to the storage room 20, a detection sensor 180; 1920 configured to an amount of frost generated on a heat exchanger 100 included in the cooling part 1850, a detection circuit 210 electrically connected to the detection sensor 180; 1920 and the heat exchanger 100, a defrost heater 150; 1850 configured to heat the heat exchanger 100 such that the frost is removed; a cover sheet 160; 170 covering a portion of a surface of the heat exchanger 100, and a drain cover 130 disposed under the heat exchanger 100. The detection circuit 210 may be configured to detect a capacitance between the detection sensor 180; 1920 and a plurality of fins 120 included in the heat exchanger 100, which varies based on the amount of frost formed on the heat exchanger 100.

In the refrigerator 1 according to an embodiment of the disclosure, the detection sensor 180; 1920 may be connected to a variable capacitor 311 included in the detection circuit 210. The plurality of fins 120 may be connected to a ground terminal 324 included in the detection circuit 210.

In the refrigerator 1 according to an embodiment of the disclosure, the detection sensor 180; 1920 may include an electrode layer 183 including a conductive material and a protective film 182; 185 disposed to cover one surface or two opposite surfaces of the electrode layer.

In the refrigerator 1 according to an embodiment of the disclosure, the conductive material may include graphene.

In the refrigerator 1 according to an embodiment of the disclosure, the cover sheet 160; 170 may include a first cover sheet 160 and a second cover sheet 170. A lower side of the first cover sheet 160 may be connected to an upper side of the drain cover 130, and the second cover sheet 170 may be disposed at a relatively higher position than the first cover sheet 160. The detection sensor 180; 1920 may be attached to one of an inner surface of the first cover sheet 160 or an inner surface of the second cover sheet 170 adjacent to the heat exchanger 100.

In the refrigerator 1 according to an embodiment of the disclosure, each of the cover sheet 160; 170 and the drain cover 130 may include a non-conductive material.

In the refrigerator 1 according to an embodiment of the disclosure, the cover sheet 160; 170 may include a mica sheet.

In the refrigerator 1 according to an embodiment of the disclosure, the second cover sheet 170 may be coupled to be fixed to side panels 140, 141 respectively disposed on two opposite side surfaces of the heat exchanger.

In the refrigerator 1 according to an embodiment of the disclosure, each of the side panels 140, 141 may include a coupling protrusion 145 protruding from an edge of each of the side panels (140, 141). When the second cover sheet 170 is coupled to the side panels 140, 141, the coupling protrusions 145 of the side panels 140, 141 may be fittingly fixed into coupling holes 171 formed in two opposite sides of the second cover sheet 170.

In the refrigerator 1 according to an embodiment of the disclosure, the detection sensor 180; 1920 may have a predetermined area defined by a horizontal length and a vertical width w of the detection sensor 180; 1920. The horizontal length of the detection sensor 180; 1920 may be same as a horizontal length of the heat exchanger 100, and the vertical width w of the detection sensor 180; 1920 may be 5mm to 10mm.

A home appliance (e.g., the refrigerator 1 of FIG. 1) according to an embodiment of the disclosure may comprise a storage room 20, a cooling part 1850 configured to supplying cold air to the storage room 20; a detection sensor 180; 1920 configured to frost generated on a heat exchanger 100 included in the cooling part 1850, a detection circuit 210 electrically connected to the detection sensor 180; 1920 and the heat exchanger 100, a defrost heater 150; 1860 configured to heat the heat exchanger 100 such that the frost is removed, and a processor 1811 electrically connected to the detection circuit 210 and configured to drive and control the defrost heater 150; 1860 based on sensing information sensed by the detection sensor 180; 1920. The processor 1811 may be configured to obtain (2010; 2310) the sensing information based on a capacitance detected between the detection sensor 180; 1920 and a plurality of fins 120 included in the heat exchanger 100 through the detection circuit 210, generate (2110, 2120) a plurality of data based on the sensing information, determine (2020; 2130; 2140; 2150; 2160; 2320; 2420) a defrost start time based on the plurality of data, and turn on (2040; 2340; 2440) the defrost heater 150; 1860 based on reaching the defrost start time. The plurality of data may include first data on an amount of the frost and second data on a speed at which the frost accumulates on the heat exchanger 100.

In the refrigerator 1 according to an embodiment of the disclosure, the processor 1811 may be configured to determine (2020; 2130; 2140; 2150; 2160; 2320; 2420) the defrost start time for operating the defrost heater based on the first data exceeding a first threshold and the second data exceeding a second threshold.

In the refrigerator 1 according to an embodiment of the disclosure, the plurality of data may include a third data on a time at which a compressor 51; 1851 included in the cooling part 1850 is driven, and the processor 1811 may be configured to determine (2020; 2130; 2140; 2150; 2160; 2320; 2420) the defrost start time based on the first data, the second data, and the third data.

In the refrigerator 1 according to an embodiment of the disclosure, the detection sensor 180; 1920 may be configured to detect, at a predetermined time period, a capacitance between the detection sensor 180; 1920 and a plurality of fins 120 included in the heat exchanger 100, which varies based on the amount of frost.

In the refrigerator 1 according to an embodiment of the disclosure, the detection sensor 180; 1920 may be connected to a variable capacitor 311 included in the detection circuit 210, and the plurality of fins 120 may be connected to a ground terminal 324 included in the detection circuit 210.

A control method for removing frost generated on a surface of a heat exchanger 100 of a home appliance (e.g., the refrigerator of FIG. 1) may comprise obtaining (2010; 2310) sensing information based on a capacitance detected between a detection sensor 180; 1920 and a plurality of fins 120 included in a heat exchanger 100, through a detection circuit 210, generating (2110, 2120) a plurality of data based on the sensing information, determining (2020; 2130; 2140; 2150; 2160; 2320; 2420) a defrost start time based on the plurality of data, and turning on (2040; 2340; 2440) a defrost heater 150; 1860 based on reaching the defrost start time. The plurality of data may include first data on an amount of the frost and second data on a speed at which the frost accumulates on the heat exchanger 100.

The control method of the refrigerator 1 according to an embodiment of the disclosure may comprise determining (2020; 2130; 2140; 2150; 2160; 2320; 2420) the defrost start time based on the first data exceeding a first threshold and the second data exceeding a second threshold.

In the control method of the refrigerator 1 according to an embodiment of the disclosure, the plurality of data may include a third data on a speed at which a compressor 51; 1851 included in the cooling part 1850 is driven, and the control method may comprise determining (2020; 2130; 2140; 2150; 2160; 2320; 2420) the defrost start time based on the first data, the second data, and the third data.

In the control method of the refrigerator 1 according to an embodiment of the disclosure, the detection sensor 180; 1920 may be configured to detect, at a predetermined time period, a capacitance between the detection sensor 180; 1920 and a plurality of fins 120 included in the heat exchanger 100, which varies based on the amount of frost formed on the heat exchanger 100.

In the control method of the refrigerator 1 according to an embodiment of the disclosure, the detection sensor 180; 1920 may be connected to a variable capacitor 311 included in the detection circuit 210, and the plurality of fins 120 may be connected to a ground terminal 324 included in the detection circuit 210.

## Claims

1. A home appliance comprising:
a storage room;
a cooling part configured to supply cold air to the storage room, the cooling part including a heat exchanger including a plurality of fins;
a detection sensor, and
a detection circuit configured to:
detect a capacitance between the detection sensor and the plurality of fins, and that varies based on an amount of frost formed on the heat exchanger, and
detect the amount of frost formed on the heat exchanger based on the detected capacitance.

2. The home appliance of claim 1, wherein
the detection circuit includes a variable capacitor and a ground terminal,
the detection sensor is connected to the variable capacitor, and
the plurality of fins are connected to the ground terminal.

3. The home appliance of claim 1 or 2, wherein
the detection sensor includes:
an electrode layer including a conductive material, and
a protective film covering one surface or two opposite surfaces of the electrode layer.

4. The home appliance of claim 3, wherein
the conductive material includes graphene.

5. The home appliance (1) of any one of claims 1 to 4, further comprising:
a cover sheet covering a portion of a surface of the heat exchanger, the cover sheet including a first cover sheet and a second cover sheet; and
a drain cover under the heat exchanger,
wherein a lower side of the first cover sheet is connected to an upper side of the drain cover,
the second cover sheet is at a relatively higher position than the first cover sheet, and
the detection sensor is attached to one of an inner surface of the first cover sheet or an inner surface of the second cover sheet facing the heat exchanger.

6. The home appliance of claim 5, wherein
each of the cover sheet and the drain cover includes a non-conductive material.

7. The home appliance of claim 5, wherein
the cover sheet includes a mica sheet.

8. The home appliance of claim 5, wherein
the heat exchanger includes side panels respectively arranged on two opposite side surfaces of the heat exchanger, and
the second cover sheet is coupled to the side panels.

9. The home appliance of claim 8, wherein
each of the side panels includes a coupling protrusion protruding from an edge of the respective side panels, and fixed into respective coupling holes formed in opposite sides of the second cover sheet.

10. The home appliance of claim 1, wherein
the detection sensor has a predetermined area defined by a horizontal length and a vertical width of the detection sensor,
the horizontal length of the detection sensor equals a horizontal length of the heat exchanger, and
the vertical width of the detection sensor is 5mm to 10mm.

11. A home appliance comprising:
a storage room;
a cooling part configured to supply cold air to the storage room, the cooling part including a heat exchanger including a plurality of fins;
a detection sensor;
a detection circuit configured to detect a capacitance between the detection sensor and the plurality of fins;
a defrost heater configured to heat the heat exchanger to remove frost from the heat exchanger; and
a processor configured to:
obtain sensing information based on the detected capacitance,
generate a plurality of data based on the obtained sensing information, the generated plurality of data including first data indicating an amount of the frost on the heat exchanger and second data indicating a speed at which the frost accumulates on the heat exchanger,
determine a defrost start time to turn on the defrost heater to remove the frost on the heat exchanger based on the first data and the second data included in the generated plurality of data, and
turn on the defrost heater based on reaching the determined defrost start time.

12. The home appliance of claim 11, wherein
the processor is configured to determine the defrost start time based on the first data exceeding a first threshold and the second data exceeding a second threshold.

13. The home appliance of claim 11 or 12, wherein
the cooling part includes a compressor,
the generated plurality of data includes third data indicating a time at which the compressor is driven, and
the processor is configured to determine the defrost start time based on the first data, the second data, and the third data included in the generated plurality of data.

14. The home appliance of claim 11, wherein
the detection sensor is configured to detect the capacitance between the detection sensor and the plurality of fins, and that varies based on the amount of frost formed on the heat exchanger, at a predetermined time period.

15. The home appliance of any one of claims 11 to 14, wherein
the detection circuit includes a variable capacitor and a ground terminal,
the detection sensor is connected to the variable capacitor, and
the plurality of fins are connected to the ground terminal.
